# EUROPEAN PATENT SPECIFICATION

(11) **EP 3 374 915 B1**
(45) Date of publication and mention of the grant of the patent: **30.06.2021**
(21) Application number: 17711889.0
(22) Date of filing: 01.03.2017
(51) Int. Cl.: G06F 21/32

(54) **FACIAL TEMPLATE AND TOKEN PRE-FETCHING IN HANDS FREE SERVICE REQUESTS**
GESICHTSVORLAGE UND TOKEN-VORABRUFEN IN FREISPRECHDIENSTANFORDERUNGEN
PRÉ-ANALYSE DE MODÈLE FACIAL ET DE JETON DANS DES DEMANDES DE SERVICE MAINS LIBRES

(30) Priority: 01.03.2016 US 201662302130 P
(43) Date of publication of application: 19.09.2018
(73) Proprietor: Google LLC, Mountain View, CA 94043 (US)
(72) Inventor: CHANDRASEKARAN, Sashikanth, Mountain View CA 94043 (US); ZWIEBEL, Timothy, Raymond, Mountain View CA 94043 (US); WANG, Yilei, Mountain View CA 94043 (US)
(74) Representative: Bull, Duncan Richard
(86) International application number: PCT/US2017/020270
(87) International publication number: WO 2017/151815

(56) References cited:
- WO-A1-2016/007445
- WO-A1-2016/007445
- WO-A1-2016/007801
- WO-A1-2016/007801
- US-A1- 2014 372 128
- US-A1- 2014 372 128

## Description

### TECHNICAL FIELD

The present disclosure relates to improving user convenience in processing service requests by identifying user accounts for use in service requests based on facial recognition of users by an account management system.

### BACKGROUND

When consumers initiate service requests at a service system location, many methods of conducting a service request are available. Consumers may use many different cards or accounts for service requests, such as cards or accounts. The user account identifiers and other data represented by the cards may be communicated to the service provider system via magnetic stripes, near field communication technologies involving user computing devices, and other suitable mechanisms.
Current applications for conducting service requests at a service system locations do not provide the opportunity for the consumer to make a hands-free service request. Additionally, current applications require the consumer to perform actions to identify himself by providing user account identifiers or other data to the service system.

WO 2016/007801 A1 discloses a system for conducting hands-free transactions. The system comprises a server at a payment processing system, a user computing device, and a merchant computing device. The payment processing system receives a communication from a hands-free payment application on a user device, the communication comprising a first transaction token, an identification of a user account, and a beacon identifier. The merchant may provide a challenge to the user and use the response to identify the token and account of the user. The merchant computing device can use voice patterns of the user to assist in identifying the token and account of the user. The system receives from the merchant computing device a transaction request, the transaction request comprising the first transaction token and transaction data associated with the transaction request. The system determines that the transaction is for an amount less than a configured transaction limit and communicates a request for an authorization of the transaction.

US 2014/372128 A1 discloses a method for speech transaction processing. Therein, a location of a device associated with a user may be determined. A reference to a voice model associated with the user stored within a database may be retrieved, based at least in part on the location. A voice segment may be received from the user. Using the reference, the voice segment may be compared to the voice model stored within the database. A determination may be made whether the user is authenticated for the transaction based on the comparing step.

WO 2016/007445 A1 discloses a system for conducting hands-free transactions. The system comprises a server at a payment processing system, a user computing device, and a merchant computing device. The payment processing system registers a merchant system as a hands-free payment participant and provides a beacon identifier. The payment processing system receives a communication from a hands-free payment application on a user computing device, the communication comprising a transaction token, an identification of a user account, and the beacon identifier received by the user computing device via a wireless communication from a device associated with the merchant system and transmits the transaction token to the merchant system computing device. The payment processing system receives from the merchant system computing device, a transaction request, the transaction request comprising the token and transaction data associated with the transaction request and conducts the transaction between the user account and the merchant system based on the received token and transaction request.

### SUMMARY

Techniques herein provide computer-implemented methods to process a hands-free service request with facial recognition of a user. Specifically, the present invention is defined by a computer implemented method according to claim 1; a computer program product according to claim 5; and a system according to claim 9.

According to another aspect of the present disclosure, a method is proposed comprising: receiving, by the one or more computing devices and from a user computing device associated with a user account, first location data and a user account identifier; determining, by the one or more computing devices, that the received first location data corresponds to a location comprising a service computing device; adding, by the one or more computing devices, a user facial template associated with the user account identified by the user account identifier to a log of current customers at the location; receiving, by the one or more computing devices and from the service computing device at the location, a request for the log of current customers at the location; transmitting, by the one or more computing devices and to the service computing device at the location, the log of current customers comprising one or more facial templates and comprising at least the user facial template; receiving, by the one or more computing devices and from the service computing device, a request to process a service request and an indication of an identification of user facial template; extracting, by the one or more computing devices, user account data associated with the user account associated with the user facial template; and processing, by the one or more computing devices, a service request based on account data associated with the user account. The service computing device could comprise a merchant point of sale device and the one or more computer devices transmitting the log of current customer could be a part of an account management system maintaining user accounts.

In an example, a service provider system registers with an account management system maintaining user accounts. The service provider system installs one or more beacon devices and one or more service computing devices at a service system location. A user establishes an account with the account management system and downloads a service application on a user computing device associated with the user. In an example, the user transmits an image of himself to the account management system to establish a facial template associated with the user account. In addition, the user may transmit an audio recording of himself to the account management system to establish an additional audio template associated with the user account. The user enters a service system location and signs into the service application via the user computing device. The user computing device receives a beacon device identifier broadcasted at the service location from the beacon device and transmits the beacon device identifier to the account management system. The account management system transmits facial templates to the service computing device associated with users whose user computing devices are in network range of the beacon device and who are signed in to the service application. The account management system may also transmit audio templates and/or challenges and responses to the service computing device associated with users whose user computing devices are in network range of the beacon device and who are signed in to the service application. In another example, the account management system transmits the facial templates, audio templates, and/or challenges and responses to a service system camera device that is distinct from the service computing device at the service system location but communicates with the service computing device.

In one example, a merchant camera device communicatively coupled to the merchant point of sale device captures a facial image of the user and the merchant point of sale device identifies the user based on comparing the captured facial image against the received facial templates. In an example, the merchant camera device identifies the user based on comparing the captured facial image against the received facial templates and sends an identification of the user to the merchant point of sale device at a time before the user initiates a transaction. In another example, the user approaches the merchant point of sale device and, in response to the merchant point of sale operator selecting an option via the merchant point of sale device to initiate a hands free transaction, the merchant point of sale device captures an image of the user and identifies the user by comparing the captured facial image against the received facial templates. Alternatively, the user submits an audio recording to the merchant point of sale device, which identifies the user based on comparing the received audio recording against audio templates for users. In yet another embodiment, the merchant point of sale device operator identifies the user based on a user's response to a challenge.

In one example, after identifying the user via facial recognition, audio recognition, or challenge and response, or after detecting a previously identified user, the merchant point of sale device transmits a request to the account management system for a payment token for the identified user to use in a potential transaction. The account management system then generates a payment token for the identified user. An example payment token comprises a series of alphanumeric and/or symbolic characters. The example payment token may be associated with a payment account of the user and be recognizable by an issuer system associated with the payment account of the user. For example, the account management system generates the payment token and communicates the payment token to an issuer system associated with a payment account of the user along with the user payment account information. In this example, if the issuer system, at a later time, receives the payment token from a point of sale device in a payment transaction, the issuer system is able to extract the user payment account information associated with the payment token. The account management system transmits the generated payment token for the identified user to the merchant point of sale device.

The merchant point of sale device processes a transaction using the payment token associated with the identified user received from the account management system. The merchant point of sale device generates a transaction authorization request comprising the payment token and transaction details and transmits the transaction authorization request to an issuer system associated with the user account selected for use in the transaction. The issuer system identifies the user payment account based on the received payment token and processes the transaction using the transaction details and the user payment account information. The merchant point of sale device receives an approval of the transaction authorization request and transmits a receipt to the merchant point of sale device.

In certain other example aspects described herein, systems and computer program products to conduct a hands-free transaction with facial recognition of a user are provided. In particular, one aspect relates to a system to process hands-free service requests with facial recognition of users, the system comprises: a storage device; a processor communicatively coupled to the storage device, wherein the processor executes application code instructions that are stored in the storage device to cause the system to: receive, from a user computing device associated with a user account, first location data and a user account identifier; determine that the received first location data corresponds to a location comprising a service computing device; add a user facial template associated with the user account identified by the user account identifier to a log of current customers at the location; receive, from the service computing device at the location, a request for the log of current customers at the location; transmit, to the service computing device at the location, the log of current customers comprising one or more facial templates and comprising at least the user facial template; receive, from the service computing device, a request to process a service request and an indication of an identification of user facial template; extract user account data associated with the user account associated with the user facial template; and process a service request based on account data associated with the user account. The service computing device could comprise a merchant point of sale device. The system could comprise an account management system maintaining user accounts.

These and other aspects, objects, features, and advantages of the examples will become apparent to those having ordinary skill in the art upon consideration of the following detailed description of illustrated examples.

### BRIEF DESCRIPTION OF THE DRAWINGS

Figure 1 is a block diagram depicting a system for processing a hands-free transaction with facial recognition of a user, in accordance with certain examples.
Figure 2 is a block flow diagram depicting a method for processing a hands-free transaction with facial recognition of a user, in accordance with certain examples.
Figure 3 is a block flow diagram depicting a method for registering, by a merchant system, with an account management system and installing hardware at a merchant system location, in accordance with certain examples.
Figure 4 is a block flow diagram depicting a method for registering, by a user, for an account with an account management system, in accordance with certain examples.
Figure 5 is a block flow diagram depicting a method for establishing a facial template associated with a user account, in accordance with certain examples.
Figure 6 is a block flow diagram depicting a method for establishing an audio template associated with a user account, in accordance with certain examples.
Figure 7 is a block flow diagram depicting a method for receiving, by a user computing device, a merchant beacon identifier broadcasted by a merchant beacon device, in accordance with certain examples.
Figure 8 is a block flow diagram depicting a method for receiving, by a point of sale device, a facial template for each user in range of a merchant beacon device, in accordance with certain examples.
Figure 9 is a block flow diagram depicting a method for updating, by a merchant point of sale device, a current customer log as users enter or leave a network range of a merchant beacon device, in accordance with certain examples.
Figure 10 is a block flow diagram depicting a method for identifying, by a merchant point of sale device, a user via facial recognition and receiving a payment token from an account management system, in accordance with certain examples.
Figure 11 a block flow diagram depicting a method for identifying, by a merchant point of sale device, a user via voice recognition, in accordance with certain examples.
Figure 12 is a block flow diagram depicting a method for identifying, by a merchant point of sale device operator, a user via a challenge and a response, in accordance with certain examples.
Figure 13 is a block flow diagram depicting a method for receiving, by a merchant point of sale device, a payment token for an identified user, in accordance with certain examples.
Figure 14 is a block flow diagram depicting a method for initiating, by a user, a transaction at a merchant point of sale device, in accordance with certain examples.
Figure 15 is a block flow diagram depicting a method for conducting a transaction, in accordance with certain examples.
Figure 16 is a block diagram depicting a computing machine and module, in accordance with certain examples.

### DETAILED DESCRIPTION OF EXAMPLES

### Overview

The examples described herein provide computer-implemented techniques for processing a hands-free transaction with facial recognition of a user.

In an example, a merchant system registers with an account management system. The merchant system installs one or more merchant beacon devices and one or more merchant point of sale devices at a merchant system location. A user establishes an account with the account management system and downloads a payment application on a user computing device associated with the user. In an example, the user transmits an image of himself and/or an audio recording of himself to the account management system to establish a facial template and/or audio template associated with the user account. The user enters a merchant system location and signs into the payment application via the user computing device. The user computing device receives a merchant beacon device identifier broadcasted at the merchant location from the merchant beacon device and transmits the merchant beacon device identifier to the account management system. In an example, the user computing device receives the merchant beacon identifier via a wireless scan at the merchant system location. In another example, the user computing device establishes a local network connection with the merchant beacon device and receives the merchant beacon device via the network connection. The account management system transmits facial templates, audio templates, and/or challenges and responses to the merchant point of sale device associated with users whose user computing devices are in network range of the merchant beacon device and who are signed in to the payment application.

A merchant camera device associated with the merchant point of sale device captures a facial image of the user and the merchant point of sale device identifies the user based on comparing the captured facial image against the received facial templates. Alternatively, the user submits an audio recording to the merchant point of sale device, which identifies the user based on comparing the received audio recording against audio templates for users. In yet another embodiment, the merchant point of sale device operator identifies the user based on a user's response to a challenge.

After identifying the user, the merchant point of sale device transmits a request to the account management system for a payment token. The account management system generates a payment token for the user identified via facial recognition, audio recognition, or challenge and response. An example payment token comprises a series of alphanumeric and/or symbolic characters. The example payment token may be associated with a payment account of the user and be recognizable by an issuer system associated with the payment account of the user. For example, the account management system generates the payment token and communicates the payment token to an issuer system associated with a payment account of the user along with the user payment account information. In this example, if the issuer system, at a later time, receives the payment token from a point of sale device in a payment transaction, the issuer system is able to extract the user payment account information associated with the payment token. The account management system transmits the generated payment token associated with the identified user to the merchant point of sale device.

The merchant point of sale device processes a transaction using the payment token associated with the user received from the account management system. The merchant point of sale device generates a transaction authorization request comprising the payment token and transaction details and transmits the transaction authorization request to an issuer system associated with the user account selected for use in the transaction. The issuer system identifies the user payment account based on the received payment token and processes the transaction using the transaction details and the user payment account information. The merchant point of sale device receives an approval of the transaction authorization request and transmits a receipt to the merchant point of sale device.

In an example, a merchant system registers with an account management system. A merchant system operator installs a payment application on a merchant point of sale device. In another example, the merchant system operator installs the payment application on a plurality of merchant point of sale devices at a merchant system location. A merchant beacon device receives a beacon identifier code from an account management system. For example, the merchant system operator installs one or more merchant beacon devices at the merchant system location. The merchant beacon device broadcasts the merchant beacon identifier code via wireless communication at the merchant system location. The merchant system operator installs a merchant camera device at the merchant system location to correspond to a corresponding merchant point of sale device. In another example, a plurality of merchant camera devices are installed at the merchant system location, each merchant camera device corresponding to a particular merchant point of sale device. In yet another example, a particular merchant camera device may correspond to two or more particular merchant point of sale devices.

In an example, the user registers with an account management system. For example, the user accesses an account management system website via a user computing device associated with the user. The user registers with the account management system and downloads a payment application onto the user computing device. In an example, the account management system establishes a facial template associated with the user account. For example, the payment application displays a request for the user to capture a facial image via the user computing device. The user selects an option to capture a facial image. The payment application activates a camera module on the user computing device and the users captures a facial image of himself. The account management system receives the facial image. The account management system creates a facial template associated with the user account based on the received facial image. The account management system deletes the received facial image. In another example, the account management system establishes an audio template associated with the user account. For example, the payment application requests and receives user audio via the user computing device. The payment application transmits the received user audio to the account management system and the account management system creates an audio template associated with the user account based on the received audio of the voice of the user. The account management system deletes the received audio of the voice of the user. In yet another example, the account management system establishes a challenge and response associated with the user account. For example, the payment application on the user computing device displays a challenge, such as "user initials," and requests a response from the user. In this example, user John Doe may enter "J. D." as the response to the challenge. In this example, the payment application transmits the entered response to the account management system, which associates the response with the challenge in the user account.

The user signs in to the payment application on the user computing device. The user carries the user computing device within a threshold distance of a merchant beacon device at the merchant system location. The user computing device receives or detects a merchant beacon identifier broadcast by the merchant beacon device and transmits the received or detected merchant beacon identifier and a user account identifier to the account management system. The account management system receives the merchant beacon identifier and the user account identifier. The account management system extracts a facial template associated with the user account identifier and identifies a merchant point of sale device associated with the merchant beacon device identifier. In another example, the account management system extracts an audio template associated with the user account identifier and/or a challenge and response associated with the user account identifier in addition to or instead of extracting the a facial template associated with the user account identifier.

The account management system transmits a facial template of the identified user to the merchant point of sale device associated with the merchant beacon device identifier. For example, a facial template associated with the identified user's account is transmitted to the merchant point of sale device. The merchant point of sale device receives the facial template of the user, audio template of the user, and/or challenge and response associated with the user.

The merchant point of sale device associates the facial template of the user, the audio template of the user, and the challenge and response of the user in a current customer log. The merchant point of sale device periodically updates the current customer log based on updates received from the account management system. The merchant point of sale device thus updates a log of current customers at the location. For example, the account management system transmits a subsequent facial template, audio template, and challenge and response for a subsequent user that, carrying a user computing device via which the user is signed in to the payment application, enters a threshold distance of a merchant beacon device required for the user computing device to scan for a merchant beacon device identifier broadcasted the merchant beacon device and/or to establish a wireless network connection with the merchant beacon device. In this example, the account management system receives the merchant beacon device identifier transmitted by the user computing device and transmits a facial template of the subsequent user, audio template of the subsequent user, and challenge and response of the subsequent user to the merchant point of sale device. In another example, in response to detecting that the user computing device associated with a particular user in the current customer log is no longer able to scan for and/or detect a merchant beacon device identifier or is no longer maintaining a network connection with the merchant beacon device, or is otherwise no longer retransmitting the merchant beacon device identifier to the account management system, or is no longer signed in to the payment application, the account management system transmits a notice to the merchant point of sale device that a user has left the merchant location. In this example, the merchant point of sale device deletes (removes) the indicated user and associated data from the current customer log. For example, deleting the indicated user comprises deleting the user account identifier, facial template, audio template, challenge and response, and/or any other data associated with the particular user on the merchant point of sale device.

The user approaches the merchant point of sale device. The merchant camera device, communicatively coupled to the merchant point of sale device, captures video of the user. For example, the user is positioned in front of the point of sale device and the merchant camera device is positioned to be able to capture a video of the user's face. In an example, the merchant camera device starts capturing video of the user only when the merchant point of sale device receives an input from an operator of the merchant point of sale device to identify the user. In another example, the merchant camera device starts capturing video when the associated merchant point of sale device receives an indication from the account management system that a user computing device associated with the user has established a network connection with the merchant beacon device and/or retransmitted the merchant beacon device identifier to the account management system. In this example, the merchant camera device does not capture video when there are no users with associated user computing devices within network range of the merchant beacon device. The merchant camera device extracts a facial image of the user from the captured video and generates a facial template from the captured facial image. The merchant camera device deletes the captured video and extracted facial image and transmits the facial template to the merchant point of sale device. In another example, the merchant camera device transmits the facial image of the user to the merchant point of sale device and the merchant point of sale device generates the facial template from the facial image.

The merchant point of sale device retrieves facial templates from the current customer log. For example, the current customer log comprises a list of users and associated facial templates for users associated with user computing devices that have currently established a network connection with the merchant beacon device at the merchant system location and/or have retransmitted the merchant beacon device identifier to the account management system. In an example, the current customer log comprises volatile or transient memory. For example, the current customer log is not saved and user information is added or deleted from the current customer log as user computing devices associated with respective users enter or leave a network range of the merchant beacon device. The merchant point of sale device compares the generated facial template from the extracted facial image to facial templates from the current customer log. The merchant point of sale device is able to identify the user if there is a match between a facial template from the current customer log and the generated facial template. The merchant point of sale device is unable to identify the user if there is no match between a facial template from the current customer log and the generated facial template.

In certain examples, if the user cannot be identified based on facial recognition, the merchant point of sale device identifies the user based on audio recognition. In another example, the account management system does not identify users based on audio recognition. In an example, if the payment processing identifies users based on audio recognition, the account management system retrieves audio templates corresponding to users from the current customer log. The merchant point of sale device displays a request to record an audio of the user via a user interface of the merchant point of sale device. The merchant point of sale device records a voice input of the user and compares the received voice input against the retrieved audio templates corresponding to users from the current customer log. The merchant point of sale device is able to identify the user if there is a match between an audio template from the current customer log and the received voice input of the user. The merchant point of sale device is unable to identify the user if there is no match between an audio template from the current customer log and the received voice input of the user. If the merchant point of sale device is able to identify the user, the merchant point of sale device notifies the account management system of the identity of the user and the account management system processes a transaction between the user and the merchant system. In an example, if the merchant point of sale device is able to identify the user but unable to notify the account management system of the identity of the user, the merchant point of sale device processes a transaction using the received payment token associated with user account of the identified user.

If the merchant point of sale device is unable to identify the user based on facial and/or voice recognition, the merchant point of sale device operator is notified, via a display on the merchant point of sale device, to issue a challenge to the user. The user provides a challenge response and the merchant point of sale operator inputs the response into the merchant point of sale device. The merchant point of sale device displays potential users from the current customer log based on the challenge response. For example, the merchant point of sale device accesses the current customer log comprising a list or table that associates challenges with corresponding responses, user account identifiers, and payment tokens. In this example, the merchant point of sale device identifies the user by correlating the challenge and the response to identify one or more users in the current customer log. In this example, the merchant point of sale device displays the one or more identified users to the merchant point of sale device operator. The merchant point of sale device operator selects a user. In an example, the merchant point of sale device operator may compare a visual image or name of the user displayed on the user computing device to the visual appearance of the current customer at the merchant point of sale device and/or documentation presented by the user to the merchant point of sale operator. In an example, the merchant point of sale device transmits the identity of the user identified by the merchant point of sale operator. If the merchant point of sale device operator is able to identify the user via the challenge and response, the merchant point of sale device notifies the account management system of the identity of the user and the account management system processes a transaction between the user and the merchant system. If the merchant point of sale device operator is unable to identify the user via the challenge and response, the merchant point of sale device operator cancels the transaction by actuating one or more objects on the user interface of the merchant point of sale device. In an example, if the merchant point of sale device is able to identify the user but unable to notify the account management system of the identity of the user, the merchant point of sale device processes a transaction using the received payment token associated with user account of the identified user.

In response to identifying the user via facial recognition, audio/voice recognition, or challenge and response, the merchant point of sale device transmits a request to the account management system for a payment token along with an identifier associated with the identified user. The account management system generates a payment token for the user identified via facial recognition, audio recognition, or challenge and response at the merchant point of sale device. An example payment token comprises a series of alphanumeric and/or symbolic characters. The example payment token may be associated with a payment account of the user and be recognizable by an issuer system associated with the payment account of the user. For example, the account management system generates the payment token and communicates the payment token to an issuer system associated with a payment account of the user along with the user payment account information. In this example, if the issuer system, at a later time, receives the payment token from a point of sale device in a payment transaction, the issuer system is able to extract the user payment account information associated with the payment token. The account management system transmits the generated payment token for the identified user to the merchant point of sale device.

The merchant point of sale device operator totals items of the user for purchase. In an example, the merchant point of sale device has already identified the user, requested a payment token for the identified user from the account management system, and received the payment token before the merchant point of sale device operator beings totaling items of the user for purchase. In another example, the merchant point of sale device does not capture an image of the user and identify the user until the merchant point of sale device operator totals the items of the user for purchase or otherwise provides an input to the merchant point of sale device. In this example, the merchant point of sale device identifies the user and then requests a payment token from the account management system in response to receiving one or more inputs of the operator of the merchant point of sale device via the user interface of the merchant point of sale device. The merchant point of sale device operator asks the user to select a payment option. The user directs the merchant point of sale device operator to initiate a transaction via the payment application. For example, as previously discussed, the payment application is installed on both the merchant point of sale device and on the user computing device. The merchant point of sale device operator selects an option on the merchant point of sale device to initiate a transaction using the payment application.

In an example, if the merchant point of sale device is able to identify the user but unable to notify the account management system of the identity of the user, the merchant point of sale device processes a transaction using the received payment token associated with user account of the identified user.

The merchant point of sale device operator confirms the transaction with permission of the user. In an example, the merchant point of sale device generates a transaction authorization request based on transaction details and the received payment token associated with the user retrieved from the current customer log. For example, transaction details may comprise a total amount of the transaction, a selected user account for use in the transaction, an account of the merchant for use in the transaction, and other useful or relevant information. The merchant point of sale device transmits a transaction authorization request to an issuer system. For example, the issuer system is associated with a user payment account selected for use by the user in all hands free transactions involving the payment application. The issuer system approves or denies the transaction authorization request and transmits a transaction authorization approval or denial of transaction authorization request to the merchant point of sale device. The merchant point of sale device transmits a transaction receipt to the user computing device and/or prints or displays a receipt for the user at the merchant point of sale device indicating a status of the transaction. For example, the merchant point of sale device displays an indication that the transaction was successfully processed or that the transaction was denied.

In another example, the merchant point of sale device transmits an indication of an identity of the user identified via facial, audio, and/or challenge and response to the account management system along with the transaction details. In this example, the account management system processes the transaction with the issuer system. For example, the account management system generates a transaction authorization request comprising the payment token, where the transaction authorization request is based on user account information and the transaction details. In an example, the merchant point of sale device transmits the transaction authorization request to the issuer system. In this example, the issuer system receives the transaction authorization request, approves or denies the transaction authorization request, and transmits either a denial of transaction authorization request or an approval of the transaction authorization request to the account management system. For example, the issuer system identifies the user payment account associated with the payment token. In an example, the transaction authorization request comprises a total transaction amount and the issuer system determines whether the transaction would result in the user exceeding the user's credit limit associated with the user payment account. The issuer system may base a decision to approve a transaction authorization request based on considerations other than the total transaction amount or the user's credit limit on the payment account.

In an example, the account management system transmits notification of an approved or denied transaction, based on the information received from the issuer system, to the merchant point of sale device and/or to the user computing device. In this example, the merchant point of sale device and/or the user computing device display or otherwise indicate to the user a status of the transaction. For example, the user computing device receives, from the account management system, and displays a text message indicating to the user that the transaction was denied.

By using and relying on the methods and systems described herein, the account management system, the merchant beacon device, the user computing device, and the merchant point of sale device enable the user to conduct a transaction with the merchant system without the user having to interact with the user computing device or produce identity documents or physical payment cards, as required in some current technology. As such, the systems and methods described herein may reduce the inputs required by the user via the user computing device and the inputs required by the merchant point of sale device operator to identify the user.

### Example System Architecture

Turning now to the drawings, in which like numerals indicate like (but not necessarily identical) elements throughout the figures, examples are described in detail.

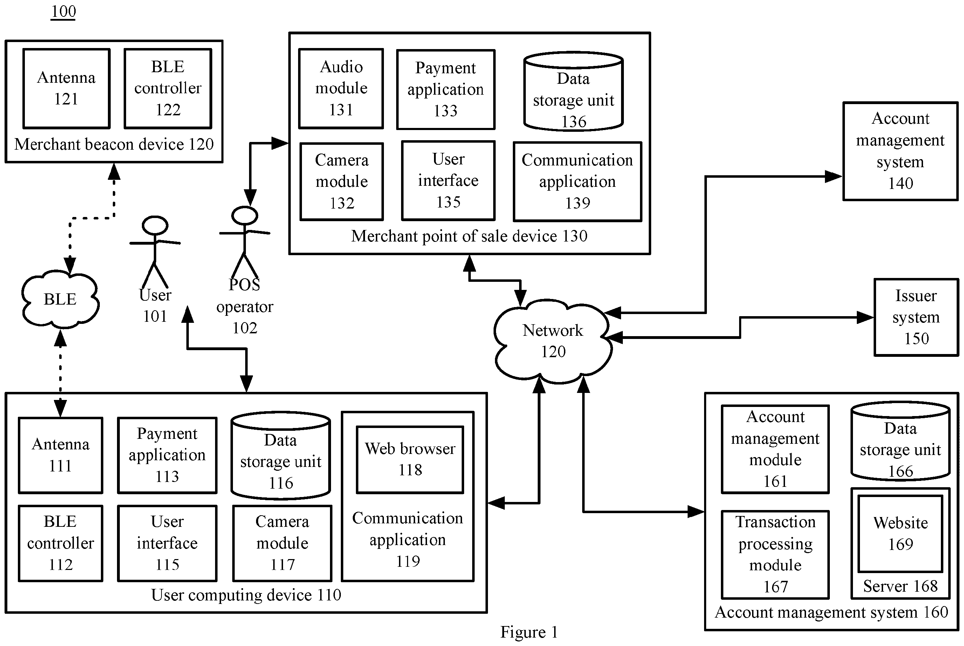

Figure 1 is a block diagram depicting a system 100 for conducting a hands-free transaction with facial recognition of a user 101, in accordance with certain examples. As depicted in Figure 1, the system 100 includes network computing devices 110, 130, 140, 150, and 160 that are configured to communicate with one another via one or more networks 120. In some embodiments, a user associated with a device must install an application and/or make a feature selection to obtain the benefits of the techniques described herein.

In examples, the network 120 can include a local area network ("LAN"), a wide area network ("WAN"), an intranet, an Internet, storage area network ("SAN"), personal area network ("PAN"), a metropolitan area network ("MAN"), a wireless local area network ("WLAN"), a virtual private network ("VPN"), a cellular or other mobile communication network, Bluetooth, Bluetooth low energy, NFC, or any combination thereof or any other appropriate architecture or system that facilitates the communication of signals, data, and/or messages. Throughout the discussion of examples, it should be understood that the terms "data" and "information" are used interchangeably herein to refer to text, images, audio, video, or any other form of information that can exist in a computer-based environment.

Each network computing device 110, 130, 140, 150, and 160 includes a device having a communication module capable of transmitting and receiving data over the network 120. For example, each network computing device 110, 130, 140, 150, and 160 can include a server, desktop computer, laptop computer, tablet computer, a television with one or more processors embedded therein and / or coupled thereto, smart phone, handheld computer, personal digital assistant ("PDA"), or any other wired or wireless, processor-driven device. In the example depicted in Figure 1, the network computing devices 110, 130, 140, 150, and 160 are operated by users 101, merchant beacon device 120 operators, merchant point of sale ("POS") device 130 operators, payment processing system 140 operators, issuer system 150 operators, and account management system 160, respectively.

An example user computing device 110 comprises an antenna 111, a Bluetooth Low Energy ("BLE") controller 112, a payment application 113, a user interface 115, a data storage unit 116, a camera module 117, a web browser 118, and a communication application 119.

In an example, the antenna 111 is a means of communication between the user computing device 110 and a merchant beacon device 120. In an example, a BLE controller 112 outputs through the antenna 111 a radio signal, or listens for radio signals from the merchant beacon device 120. In another example a Bluetooth controller, Wi-Fi controller, or a near field communication ("NFC") controller is used. In an example, the BLE controller 112 outputs through the antenna 111 a radio signal, or listens for radio signals from the merchant beacon device 120.

In an example, the BLE controller 112 is capable of sending and receiving data, performing authentication and ciphering functions, and directing how the user computing device 110 will listen for transmissions from the merchant beacon device 120 or configuring the user computing device 110 into various power-save modes according to BLE-specified procedures. In another example, the user computing device 110 comprises a Bluetooth controller, Wi-Fi controller or an NFC controller capable of performing similar functions. An example BLE controller 112 communicates with the payment application 113 and is capable of sending and receiving data over a wireless, BLE communication channel. In another example, a Bluetooth controller 112, Wi-Fi controller 112, or NFC controller 112 performs similar functions as the BLE controller 112 using Bluetooth, Wi-Fi, or NFC protocols. In an example, the BLE controller 112 activates the antenna 111 to create a wireless communication channel between the user computing device 110 and the merchant beacon device 120. The user computing device 110 communicates with the merchant beacon device 120 via the antenna 111. In an example, when the user computing device 110 has been activated, the BLE controller 112 polls through the antenna 111a radio signal, or listens for radio signals from the merchant beacon device 120.

In an example, the payment application 113 is a program, function, routine, applet, or similar entity that exists on and performs its operations on the user computing device 110. In certain examples, the user 101 must install the payment application 113 and/or make a feature selection on the user computing device 110 to obtain the benefits of the techniques described herein. In an example, the user 101 may access payment application 113 on the user computing device 110 via the user interface 115. In an example, the payment application 113 may be associated with the account management system 160. In another example, the payment application 113 may be associated with a merchant system associated with the merchant beacon device 120 and/or the merchant point of sale device 130.

In an example, the user interface 115 enables the user 101 to interact with the payment application 113 and/or web browser 118. For example, the user interface 115 may be a touch screen, a voice-based interface, or any other interface that allows the user 101 to provide input and receive output from an application or module on the user computing device 110. In an example, the user 101 interacts via the user interface 115 with the payment application 113 and/or web browser 118 to configure user 101 accounts with the account management system 160. In another example, the user 101 interacts via the user interface 115 with the payment application 113 and/or the web browser 118 to enable hands-free payments, if needed.

In an example, the data storage unit 116 comprises a local or remote data storage structure accessible to the user computing device 110 suitable for storing information. In an example, the data storage unit 116 stores encrypted information, such as HTML5 local storage.

In an example, the camera module 117 may be any module or function of the user computing device 110 that captures a digital image. The camera module 117 may be resident on the user computing device 110 or in any manner logically connected to the user computing device 110. For example, the camera module 117 may be connected to the user computing device 110 via the network 120. The camera module 117 may be capable of obtaining individual images or a video scan. Any other suitable image capturing device may be represented by the camera module 117.

In an example, the user 101 can use a communication application 119, such as a web browser 118 application or a stand-alone application, to view, download, upload, or otherwise access documents or web pages via a distributed network 120.

In an example, the web browser 118 can enable the user 101 to interact with web pages using the user computing device 110. In an example, the user 101 may access the user's 101 account maintained by the account management system 160 via the web browser 118. In another example, the user 101 may access a merchant system website or an account management system website 169 via the web browser 118. In certain examples described herein, one or more functions performed by the payment application 113 may also be performed by a web browser 118 application associated with the account management system 160.

In an example, the communication application 119 can interact with web servers or other computing devices connected to the network 120, including a web server of a merchant system and a web server 168 of the account management system 160.

In certain examples, one or more functions herein described as performed by the payment application 113 may also be performed by a web browser 118 application, for example, a web browser 118 application associated with a merchant system website or associated with the account management system 160. In certain examples, one or more functions herein described as performed by the payment application 113 may also be performed by the user computing device 110 operating system. In certain examples, one or more functions herein described as performed via the web browser 118 may also be performed via the payment application 113.

An example merchant beacon device 120 comprises an antenna 121 and a Bluetooth Low Energy ("BLE") controller 122. In an example, a merchant system location comprises one or more merchant beacon devices 120 installed at the merchant system location. In an example, each installed merchant beacon device 120 is associated by an account management system 160 with a particular merchant point of sale device 130 installed at the merchant location. For example, the account management system 160 may comprise a database that correlates merchant beacon device 120 identifiers with merchant point of sale device 130 identifiers for associated merchant point of sale devices 130. For example, a merchant point of sale device 130 identifier may comprise hardware identifier specific to the device such as a serial number or a media access control ("MAC") identifier. In another example, a merchant beacon device 120 identifier may comprise a hardware identifier specific to the beacon device or an identifier generated by the account management system 160 and stored in the merchant beacon device 120. An example merchant beacon device 120 is programmed to broadcast, emit, or otherwise transmit a particular merchant beacon device 120 identifier over a local wireless network, for example, a BLE network, to any user computing devices 110 within a threshold distance required to maintain the wireless network 120. For example, the wireless network may comprise a BLE network 120, a Wi-Fi network 120, a Bluetooth network 120, an NFC network 120, or any other appropriate wireless network 120.

In an example, the antenna 121 is a means of communication between the user computing device 110 and a merchant beacon device 120. In an example, a BLE controller 122 outputs through the antenna 121 a radio signal, or listens for radio signals from the user computing device 110. In another example a Bluetooth controller, Wi-Fi controller, or a near field communication ("NFC") controller is used. In an example, the BLE controller 122 outputs through the antenna 121 a radio signal, or listens for radio signals from the user computing device 110.

In an example, the BLE controller 122 is capable of sending and receiving data, performing authentication and ciphering functions, and directing how merchant beacon device 120 will listen for transmissions from the user computing device 110 or configuring the merchant beacon device 120 into various power-save modes according to BLE-specified procedures. In another example, the merchant beacon device 120 comprises a Bluetooth controller, Wi-Fi controller or an NFC controller capable of performing similar functions. An example BLE controller 122 communicates with the payment application 113 and is capable of sending and receiving data over a wireless, BLE communication channel. In another example, a Bluetooth controller 122, a Wi-Fi controller 122, or an NFC controller 122 performs similar functions as the Wi-Fi controller 122 using Bluetooth, Wi-Fi, or NFC protocols. In an example, the BLE controller 122 activates the antenna 121 to create a wireless communication channel between the user computing device 110 and the merchant beacon device 120. The merchant beacon device 120 communicates with the user computing device 110 via the antenna 121. In an example, when the merchant beacon device 120 has been activated, the BLE controller 122 polls through the antenna 121 a radio signal, or listens for radio signals from the user computing device 110.

An example merchant point of sale device 130 comprises an audio module 131, a camera module 132, a payment application 133, a user interface 135, a data storage unit 136, and a communication application 139.

In an example, the audio module 131 may be any module or function of the merchant POS device 130 that captures an audio input of an external environment of the merchant POS device 130. The audio module 131 may be resident on the merchant POS device 130 or in any manner logically connected to the merchant POS device 130. For example, the audio module 131 may be connected to the merchant POS device 130 via the network 120. The audio module 131 may be capable of obtaining an audio recording. Any suitable audio recording device may be represented by the audio module 131.

In an example, the camera module 132 may be any module or function of the merchant POS device 130 that captures an image or video input of an external environment of the merchant POS device 130. The camera module may be resident on the merchant POS device 130 or in any manner logically connected to the merchant POS device 130. For example, the audio module 131 may be connected to the merchant POS device 130 via the network 120. The camera module 132 may be capable of capturing one or more images or recording a video recording. Any suitable image capturing and/or video recording device may be represented by the camera module 132.

In an example, the payment application 133 is a program, function, routine, applet, or similar entity that exists on and performs its operations on the merchant point of sale device 130. In certain examples, the merchant point of sale ("POS") device operator 102 or other merchant system operator must install the payment application 133 and/or make a feature selection on the merchant point of sale device 130 to obtain the benefits of the techniques described herein. In an example, the merchant POS device operator 102 may access the payment application 133 on the merchant POS device 130 via the user interface 135 of the merchant point of sale device 130. In an example, the payment application 133 may be associated with the account management system 160. In another example, the payment application 133 may be associated with a merchant system associated with the merchant beacon device 120 and the merchant camera device 140.

In an example, the user interface 135 enables the merchant POS device operator 102 to interact with the merchant POS device 130. For example, the user interface 135 may be a touch screen, a voice-based interface, or any other interface that allows the merchant POS device operator 102 to provide input and receive output from an application or module on the merchant POS device 130. In an example, the merchant POS device operator 102 interacts via the user interface 135 with the payment application 133.

In an example, the data storage unit 136 comprises a local or remote data storage structure accessible to the merchant POS device 130 suitable for storing information. In an example, the data storage unit 136 stores encrypted information, such as HTML5 local storage.

In an example, the communication application 139, such as a web browser application or a stand-alone application, enables an operator of the merchant POS device 130 to view, download, upload, or otherwise access documents or web pages via a distributed network 120. For example, the communication application 139 may enable communication over the network 120 with the account management system 160, a payment processing system 140, and/or an issuer system 150.

An example payment processing system 140 communicates with the account management system 160 and the merchant point of sale device 130. In an example, when the account management system 160 processes a payment transaction, the account management system 160 transmits user 101 payment account data to the payment processing system 140, which communicates a transaction authorization request an issuer system 150 associated with the payment account data on behalf of the merchant system. In this example, the payment processing system 140 receives an approval or a denial of the payment authorization request from the issuer system 140. In this example, the payment processing system 140 communicates a notification to the account management system 160 and/or the merchant point of sale device 130 of an approved or denied transaction. In this example, the account management system 160 and/or the merchant point of sale device 130 that receives the notification of an approved or denied transaction may transmit receipt data to the user computing device 110.

An example issuer system 150 approves or denies a payment authorization request received from the merchant point of sale device 130. In an example, the issuer system 150 communicates with the merchant point of sale device 130 over the network 120. In an example, the issuer system 150 communicates with an acquirer system to approve a credit authorization for the user 101 and to make payment to the merchant system. For example, the acquirer system is a third party payment processing system 140. In other examples, the issuer system 150 receives the payment authorization request from the payment processing system 140 or the account management system 160 via the network 120.

An example account management system 160 comprises an account management module 161, a facial recognition module 163, an audio recognition module 165, a data storage unit 166, a transaction processing module 167, a server 168, and a website 169.

In an example, the account management module 161 manages one or more user 101 accounts. In an example, a user 101 account may comprise a digital wallet account, an email account, a social networking account, or any other appropriate account associated with the account management system 160. In an example, the account management system 161 communicates with a payment application 113 operating on a user computing device 110 associated with a user 101 having a user 101 account with the account management system 160. In an example, the user 101 enters payment account information into the user 101 account via the payment application 113 and the account management module 161 receives the payment account information over the network 120 and associates the received payment account information with the user 101 account.

In an example, the data storage unit 166 comprises a local or remote data storage structure accessible to the account management system 160 suitable for storing information. In an example, the data storage unit 166 stores encrypted information, such as HTML5 local storage.

In certain examples, the transaction processing module 167 receives transaction details from a merchant POS device 130 and a request to initiate a transaction. Example transaction details comprise merchant system account information, a total amount of the transaction, and a user 101 selection of a user 101 payment account associated with the user's 101 account with the account management system 160. For example, the user's 101 account is a digital wallet account comprising one or more payment account information corresponding to one or more respective payment accounts of the user 101. In an example, the transaction processing module 167 extracts payment account information from the user 101 account corresponding to the user 101 selection of the user 101 payment account received in the transaction details from the merchant POS device 130. In an example, the transaction processing module 167 transmits a payment authorization request to an issuer system 150 or other appropriate financial institution associated with the payment account selected by the user 101 for use in the transaction. An example payment authorization request may comprise merchant system payment account information, user 101 payment account information, and a total amount of the transaction. In an example, after the issuer system 150 processes the payment authorization request, the transaction processing module 167 receives an approval or denial of the payment authorization request from the issuer system 150 over the network 120. In an example, the transaction processing module 167 transmits a receipt to the merchant POS device 130 and/or the user computing device 110 comprising a summary of the transaction.

It will be appreciated that the network connections shown are example and other means of establishing a communications link between the computers and devices can be used. Moreover, those having ordinary skill in the art having the benefit of the present disclosure will appreciate that the user computing device 110, the merchant beacon device 120, the merchant point of sale device 130, the payment processing system 140, the issuer system 150, and the account management system 160 illustrated in Figure 1 can have any of several other suitable computer system configurations. For example, a user computing device 110 embodied as a mobile phone or handheld computer may or may not include all the components described above.

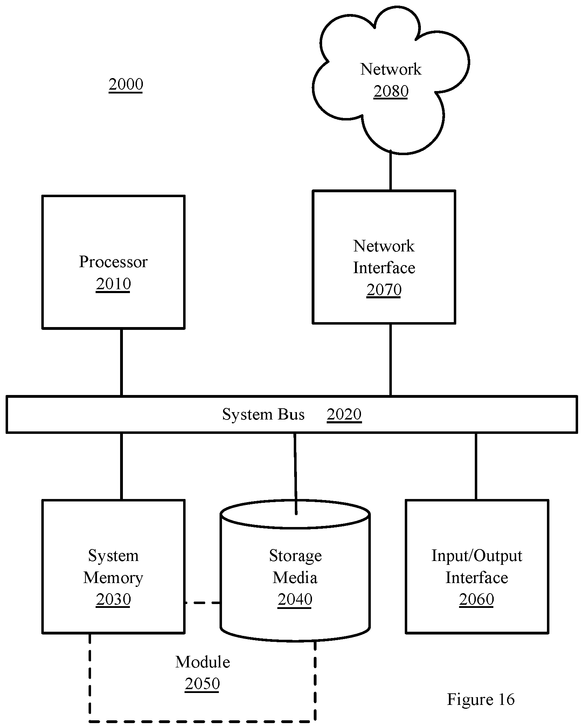

In examples, the network computing devices and any other computing machines associated with the technology presented herein may be any type of computing machine such as, but not limited to, those discussed in more detail with respect to Figure 16. Furthermore, any modules associated with any of these computing machines, such as modules described herein or any other modules (scripts, web content, software, firmware, or hardware) associated with the technology presented herein may by any of the modules discussed in more detail with respect to Figure 16. The computing machines discussed herein may communicate with one another as well as other computer machines or communication systems over one or more networks, such as network 120. The network 120 may include any type of data or communications network, including any of the network technology discussed with respect to Figure 16.

### Example Processes

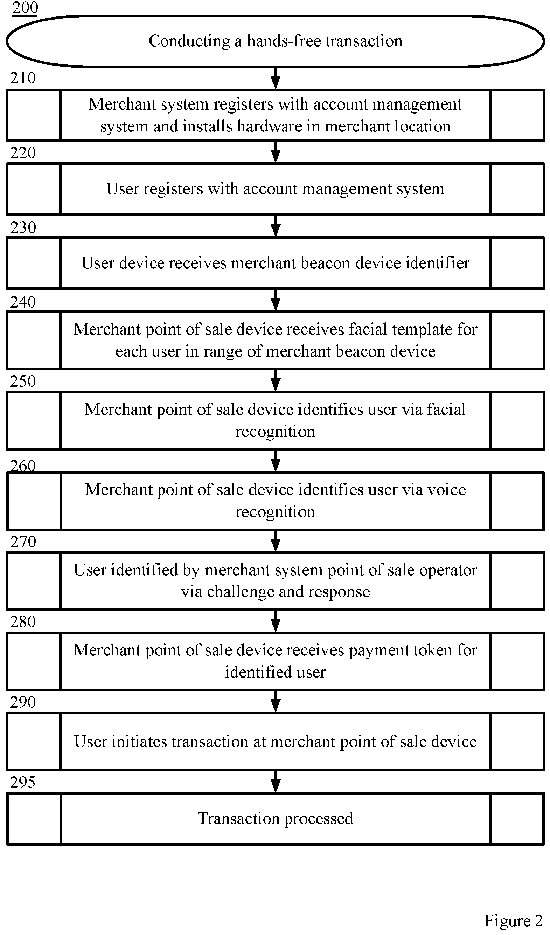

The example methods illustrated in Figures 2-15 are described hereinafter with respect to the components of the example operating environment 100. The example methods of Figures 2-15 may also be performed with other systems and in other environments.

Figure 2 is a block diagram depicting a method 200 for conducting a hands-free transaction with facial recognition of a user 101, in accordance with certain examples. The method 200 is described with reference to the components illustrated in Figure 1.

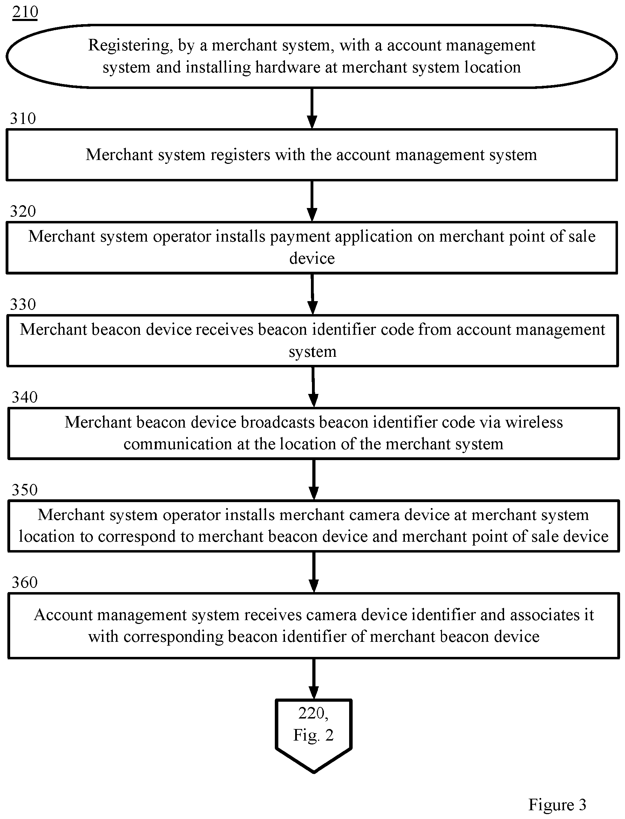

In block 210, the merchant system registers with the account management system 160 and installs hardware in a merchant location. The method for registering, by a merchant system, with an account management system 160 and installing hardware at a merchant system location is described in more detail hereinafter with reference to the method described in Figure 3.

Figure 3 is a block diagram depicting a method 210 for registering, by a merchant system, with an account management system 160 and installing hardware at a merchant system location, in accordance with certain examples. The method 210 is described with reference to the components illustrated in Figure 1.

In the examples described herein, the merchant system does not need to install hardware at the example merchant system location in any particular order. The method 210 describes one example method of installing hardware at the merchant location. However, the merchant system or other system installing the merchant hardware does not need to install the merchant POS device 130, the merchant camera device 140, or the merchant beacon device 120 in the order described herein.

In block 310, a merchant system registers with the account management system 160. In an example, an agent of the merchant system accesses an account management system 160 website and registers for a merchant account with the account management system 160 via the website. In an example, the merchant system adds payment account information associated with a merchant account to the merchant account managed by the account management system 160. In an example, the merchant system comprises one or more merchant system locations. For example, the merchant system may comprise one or more physical store locations. An example merchant location comprises one or more merchant point of sale ("POS") devices 130. In an example, one or more merchant POS device operators 102 operate the one or more merchant POS devices 130 at the merchant system location.

In block 320, a merchant system operator installs the payment application 133 on the merchant point of sale device 130. In another example, the merchant system operator purchases a merchant POS device 130 from the account management system 160 with the payment application 133 pre-installed on the merchant POS device 130. In an example, the merchant POS device 130 is able to communicate with the account management system 160 over a network 120. In an example, the merchant POS device 130 communicates with the account management system 160 via the payment application 133. For example, the merchant POS device 130 may be able to transmit transaction details to the account management system 160 via the payment application 133 over the network 120 to enable the account management system 160 to process a transaction. In another example, the merchant POS device 130 may be able to receive a receipt from the account management system 160 that notifies a merchant POS device operator 102 as to whether a transaction was successful or not.

In block 330, the merchant beacon device 120 receives a beacon identifier from the account management system 160. In an example, the merchant system receives a beacon identifier from the account management system 160 and installs or otherwise saves the beacon identifier on the merchant beacon device 120. In an example, a merchant system operator installs the merchant beacon device 120 in proximity to a merchant POS device 130. In an example, the merchant system operator installs a plurality of merchant beacon devices 120, each merchant beacon device 120 in proximity to one or more associated merchant POS devices 130. In an example, the merchant beacon device 120 is able to broadcast a merchant beacon identifier over a wireless medium, wherein one or more user computing devices 110 located within a threshold proximity to the merchant beacon device 120 are able to receive the merchant beacon identifier over the wireless medium. In another example, the merchant beacon device 120 is able to establish a local network 120 connection to one or more user computing devices 110 located within a threshold proximity to the merchant beacon device 120 and the merchant beacon device 120 transmits the merchant beacon identifier to the one or more user computing devices 110 over the established local network 120 connection. For example, the threshold proximity depends on the network 120 communication protocol utilized by the merchant beacon device 120.

In block 340, the merchant beacon device 120 broadcasts the beacon identifier code via wireless communication at the location of the merchant system. For example, the merchant beacon device 120 may broadcast, emit, or otherwise transmit data comprising the beacon identifier via Wi-Fi, Bluetooth, Bluetooth low energy ("BLE"), near field communication ("NFC"), or other appropriate communication protocol to one or more user computing devices 110 located at the merchant system location within a threshold proximity to the merchant beacon device 120. In some examples, the merchant beacon device 120, at a time before transmitting the merchant beacon identifier, is operable to establish a network 120 connection between the merchant beacon device 120 and one or more user computing devices 110 located at the merchant system location within a threshold proximity to the merchant beacon device 120.

In block 350, a merchant system operator installs the merchant camera device 140 at the merchant system location to correspond to the merchant beacon device 120. In an example, both a merchant camera device 140 and a merchant beacon device 120 are installed in proximity to a particular merchant POS device 130. In another example, a merchant camera device 140 and a merchant beacon device 120 are installed in proximity to two or more particular merchant POS devices 130. In an example, the merchant camera device 140 is oriented to be able to capture video and/or images of a face of a user 101 standing in front of one or more merchant POS devices 130 during the process of checkout. In an example, the merchant system installs a merchant camera device 140 that is oriented to capture video and/or images of the face of a user standing in front of a particular merchant POS device 130. In another example, the merchant system installs a merchant camera device 140 that is oriented to capture video and/or images of the faces of one or more users 101 standing within a proximity of a particular plurality of merchant POS devices 130 within a range of a field of vision of the camera module 147 of the merchant camera device 140.

In block 360, the account management system 160 receives a merchant camera device 140 identifier and associates it with the corresponding beacon identifier code of the merchant beacon device 120. In an example, the merchant system and/or the account management system 160 configures the merchant camera device 140 so that the merchant camera device 140 is able to communicate with the account management system 160 over the network 120. An example camera device 140 identifier comprises a hardware identifier, a MAC address, or other useful or relevant identifier associated with the merchant camera device 140. In an example, the account management system 160 comprises a database comprising merchant camera device 140 identifiers and associated beacon identifiers for merchant beacon device 120 identifiers for a particular merchant system location. In an example, the merchant camera device transmits the merchant beacon device 120 identifier in addition to the merchant camera device 140 identifier to the account management system 160. In an example, the merchant camera device 140, during the setup and installation process, may receive the merchant beacon device 120 identifier over an appropriate wireless communication channel from the merchant beacon device 120. In another example, the merchant camera device 140, during the setup and installation process, may establish a network 120 connection with the merchant beacon device 120 and receive the merchant beacon device 120 identifier over the network 120. In another example, the account management system 160 receives the merchant camera device 140 identifier, extracts one or more merchant beacon device 120 identifiers from the database, and associates the merchant camera device 140 identifier with one or more of the one or more extracted merchant beacon device 120 identifiers. In yet another example, the merchant system operator installs the one or more merchant beacon devices 120 after installing the one or more merchant camera devices 140. In this example, the account management system 160 generates a merchant beacon device identifier to associate with a merchant camera device 140 identifier and transmits the generated merchant beacon device identifier to the merchant system. In this example, the merchant system operator manually configures the merchant beacon device 120 to broadcast, emit, or otherwise transmit the merchant beacon device identifier assigned by the account management system 160 over a network 120.

In certain examples, one or both of the merchant camera device 140 and the merchant beacon device 120 are components of the merchant POS device 130 or are wirelessly or physically connected to the merchant POS device 130 and controlled by one or more processors of the merchant POS device 130. In certain examples, certain functions described herein as performed by the merchant camera device 140 and/or the merchant beacon device 120 may also be performed by the merchant POS device 130.

From block 360, the method 210 proceeds to block 220 of Figure 2.

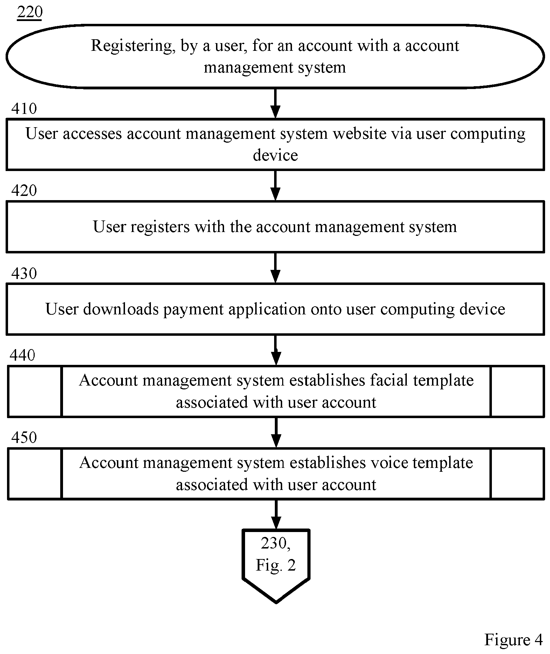

Returning to Figure 2, in block 220, the user 101 registers with the account management system 160. The method for registering, by a user 101, for an account with an account management system 160 is described in more detail hereinafter with reference to the method 220 described in Figure 4.

Figure 4 is a block diagram depicting a method 220 for registering, by a user 101, for an account with an account management system 160, in accordance with certain examples. The method 220 is described with reference to the components illustrated in Figure 1.

In block 410, the user 101 accesses the account management system website 169. For example, the user 101 accesses the account management system 160 via the web browser 118 of the user computing device 110. In another example, the user 101 may otherwise contact the account management system 160 to register for a user 101 account.

In block 420, the user 101 registers with the account management system 160. The user 101 may obtain a user account number, receive the appropriate applications and software to install on the user computing device 110, request authorization to participate in hands-free payment processing, or perform any action required by the account management system 160. The user 101 may utilize the functions of the user computing device 110, such as the user interface 115 and the web browser 118, to register and configure a user 101 account. In an example, the user 101 may enter payment account information associated with one or more user 101 accounts, for example, one or more credit accounts, one or more bank accounts, one or more stored value accounts, and/or other appropriate accounts into the user 101 account maintained by the account management system 160.

In block 430, the user 101 downloads the payment application 113 onto the user computing device 110. In an example, the payment application 113 operating on the user computing device 110 is able to communicate with the account management system 160 over the network 120. In an example, the user 101 may configure user 101 account settings or add, delete, or edit payment account information via the payment application 113. In an example, the user 101 may select an option to enable or disable the permission of the account management system 160 to process hands free transactions. For example, a hands free transaction comprises a transaction wherein the user 101 does not need to interact with the user computing device 110 or requires minimal user 101 interaction with the user computing device 110 to initiate a transaction with the merchant system.

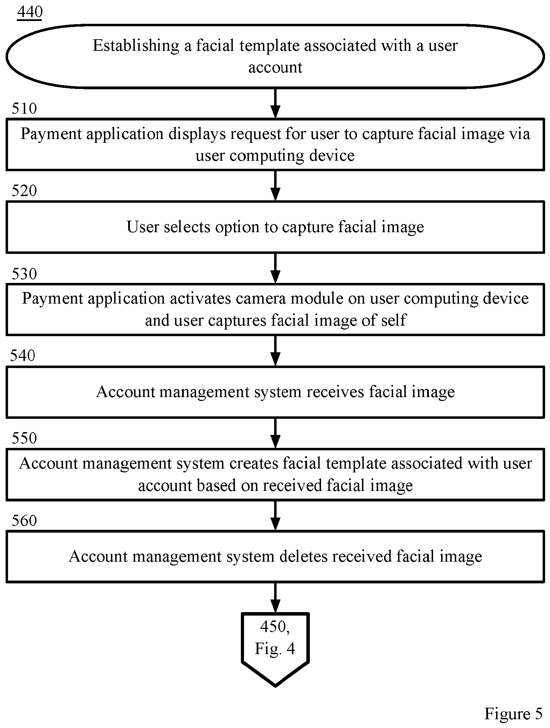

In block 440, the account management system 160 establishes a facial template associated with the user 101 account. The method for establishing a facial template associated with a user 101 account is described in more detail hereinafter with reference to the method 440 described in Figure 5.

Figure 5 is a block diagram depicting a method 440 for establishing a facial template associated with a user 101 account, in accordance with certain examples. The method 440 is described with reference to the components illustrated in Figure 1.

In block 510, the payment application 113 displays a request for the user 101 to capture a facial image via the user computing device 110. In an example, the payment application 113 displays the request via the user interface 115. In an example, the user interface 115 may display a request that reads, "to enable hands free transactions, we need an image of your face. Would you like submit a facial image now?" In this example, the user 101 may select an option to take a current picture or may otherwise select a picture stored on the user computing device 110.

In block 520, the user 101 selects an option to capture a facial image. For example, the user 101 actuates an object on the user interface 115 that reads, "yes, I would like to take a picture now."

In block 530, the payment application 113 activates the camera module 117 on the user computing device 110 and the user 101 captures a facial image of himself. In an example, the user computing device user interface 115 may display a live camera feed of the user 101 to aid the user 101 in aligning the user's 101 face to take the facial image. In an example, the payment application 113 may display on the user computing device 110 a box or other perimeter on the user interface 115 within which the user 101 should align his face to take a picture of a required size predetermined by the account management system 160. In an example, the user 101 may actuate an object on the user interface 115 to capture the image. In this example, in response to the user actuating the object on the user interface 115, the camera module 117 receives a command from the payment application 113 to capture an image of the user 101. In another example, the camera module 117 receives a command from the payment application 113 to capture a plurality of images of the user 101 as the user 101 moves the camera around the user's 101 face. For example, each of the plurality of images of the user 101 may correspond to a particular pose of the user's 101 face. An example facial image may comprise a digital image of the face of a user 101. In an example, the account management system 160 may establish guidelines for users 101 in submitting facial images. For example, the payment application 113 may direct the user 101 to remove any hats, head coverings, glasses, or other objects or accessories that may occlude regions of the user's 101 face so that payment application 160 may receive a complete depiction of the user's 101 face.

In an example, the user computing device 110 determines if the captured facial image is a valid facial image or an invalid facial image. For example, a valid facial image complies with guidelines predetermined by the account management system 160 and an invalid facial image does not comply with one or more of the guidelines. For example, if the user computing device 110 captures a facial image that comprises incorrect dimensions, if part or all of the user's 101 face is occluded, or if the image is too dark or too bright, the user computing device 110 rejects the invalid facial image and displays a request directing the user 101 to capture a subsequent facial image. In this example, the user 101 captures a subsequent facial image via the user computing device 110, and the user computing device 110 transmits the subsequent facial image to the account management system 160 via the network 120.

In block 540, the account management system 160 receives the facial image. In another example, the account management system 160 receives a plurality of facial images of the user 101. For example, the payment application 113 transmits the one or more facial images of the user 101 to the account management system 160 via the network 120. In an example, the account management system 160 associates the received one or more facial images with the user 101 account. For example, the account management system 160 is able to identify the user 101 account to associate with the received one or more images because the user 101 is currently logged in to the payment application 113 on the user computing device 110 at the time the one or more facial images are transmitted to the account management system 160. In certain examples, the account management system 160 determines if the received facial image is a valid facial image or an invalid facial image. For example, a valid facial image complies with all guidelines predetermined by the account management system 160 and an invalid facial image does not comply with one or more of the guidelines. For example, if a user 101 submits a facial image that comprises incorrect dimensions, if part or all of the user's 101 face is occluded, or if the image is too dark or too bright, the account management system 160 rejects the invalid facial image and transmits a request to the user computing device 110 directing the user 101 to capture a subsequent facial image to transmit to the account management system 160. In this example, the user computing device 110 receives and displays the request, the user 101 captures a subsequent facial image via the user computing device 110, and the user computing device 110 transmits the subsequent facial image to the account management system 160 via the network 120.

In block 550, the account management system 160 creates a facial template associated with the user 101 account based on the received facial image. In another example, the account management system 160 generates a corresponding facial template for each of a plurality of received facial images associated with the user 101 account. In an example, the facial template is of a predetermined size, for example, a 128-byte facial template. In an example, the account management system 160 generates a facial template comprising a computer code representation of the digital facial image. For example, the facial template may describe key features of the facial image of the user 101, such as shape, color, line, value, space, form, texture, or other useful or relevant feature of the image or of particular regions of the image. In an example, the facial template is generated by processing the facial image through a convolutional neural network. In an example, the account management system 160 stores the generated facial template associated with the user 101 in a data storage unit 166 associated with the account management system 160. For example, the account management system 160 database may comprise a table or other means by which it correlates each user 101 account identifier with an associated facial template of the user 101.

In another example, after the user computing device 110 captures one or more facial images of the user 101, the user computing device 110 generates one or more facial templates corresponding to one or more of the one or more captured facial images of the user 101. In this example, the user computing device 110 transmits the one or more generated facial templates to the account management system 160 over the network 120.

In block 560, the account management system 160 deletes the received facial image. For example, the account management system 160 only uses a facial template comprising a computer code representation of the facial image of the user 101. In another example, the account management system 160 saves the received facial image for future processing. For example, the account management system 160, at a later time, updates a facial template generation algorithm and generates an updated facial template corresponding to the saved facial image.

From block 560, the method 440 proceeds to block 450 in Figure 4.

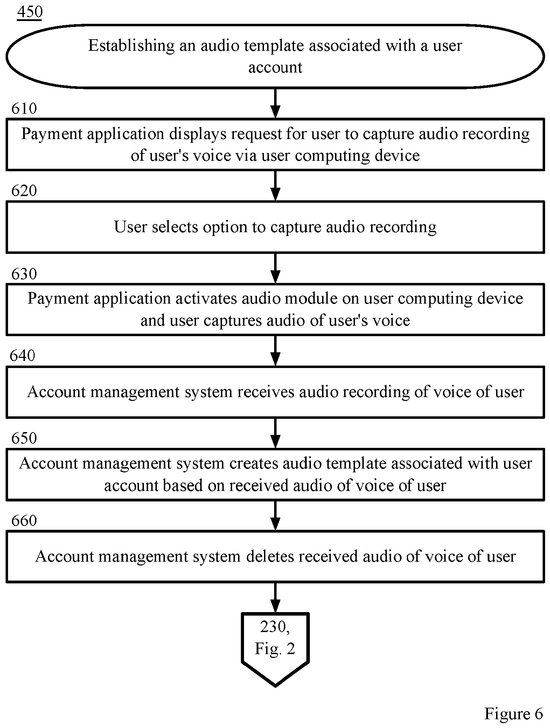

Returning to block 450, in Figure 4, the account management system 160 establishes an audio template associated with the user 101 account. The method for establishing an audio template associated with a user 101 account is described in more detail hereinafter with reference to the method 450 described in Figure 6.

Figure 6 is a block diagram depicting a method 450 for establishing an audio template associated with a user 101 account, in accordance with certain examples. The method 450 is described with reference to the components illustrated in Figure 1.

In block 610, the payment application 113 displays a request for the user 101 to capture an audio recording of the user's 101 voice via the user computing device 110. In an example, the payment application 113 displays the request via the user interface 115. In an example, the user interface 115 may display a request that reads, "to enable hands free transactions, we need recording of your voice. Would you like submit an audio recording now?" In this example, the user 101 may select an option to submit a live audio recording or may otherwise select a pre-recorded audio recording of the user 101 stored on the user computing device 110.

In block 620, the user 101 selects an option to capture an audio recording. For example, the user 101 actuates an object on the user interface 115 that reads, "yes, I would like to submit an audio recording now."

In block 630, the payment application 113 activates an audio module (not depicted) on the user computing device 110 and the user 101 captures an audio of the user's 101 voice. In an example, the user computing device user interface 115 may display guidelines received from the account management system 160 to aid the user 101 in submitting an audio recording. For example, the payment application 113 may display directions for the user 101 to record the user's 101 voice saying the user's 101 name. In another example, the payment application 113 directs the user 101 to capture an audio recording to establish a voice password that can be used in hands-free transactions of the user 101. In an example, the user 101 may actuate an object on the user interface 115 to capture or record a live audio recording. In this example, in response to the user actuating the object on the user interface 115, the audio module receives a command from the payment application 113 to capture an audio recording of the user 101. In an example, the account management system 160 may establish guidelines for users 101 in submitting audio recordings. For example, the payment application 113 may direct the user 101 to submit an audio recording no longer than a predefined maximum length of duration. For example, the audio recording must be no longer than five seconds. In another example, the payment application 113 may direct the user 101 submit an audio recording lasting a predefined length of time, for example, an audio recording lasting five seconds. In an example, after the user 101 initiates an audio recording by actuating an object of the user interface 115, the payment application 113 transmits a command to the audio module to stop recording the user's 101 voice after the predefined length of time or predefined maximum length of time has expired.

In block 640, the account management system 160 receives an audio recording of the voice of the user 101. For example, the payment application 113 or audio module transmits the audio recording to the account management system 160 over the network 120. In another example, the payment application 113 retrieves an audio recording selected by the user 101 and saved in the data storage unit 116 and transmits the retrieved audio recording to the account management system 160 over the network 120.

In block 650, the account management system 160 creates an audio template associated with the user's 101 voice based on the received audio of the voice of the user. In an example, the audio template is of a predetermined size. In an example, the account management system 160 generates an audio template comprising a computer code representation of the user's 101 audio recording. For example, the audio template may describe key features of the audio recording of the user 101, such as the intonation of the user's 101 voice or other features of the user's 101 voice. In an example, the account management system 160 stores the generated audio template associated with the user 101 in a data storage unit 166 associated with the account management system 160. For example, the account management system 160 database may comprise a table or other means by which it correlates each user 101 account identifier with an associated audio template of the user 101

In block 660, the account management system 160 deletes the received audio of the voice of the user 101. In an example, the account management system 160 deletes the received audio recording of the user 101 to protect the privacy of the user 101. For example, the account management system 160 only uses an audio template comprising a computer code representation of the audio recording of the user 101.

From block 660, the method 440 proceeds to block 230 in Figure 2.

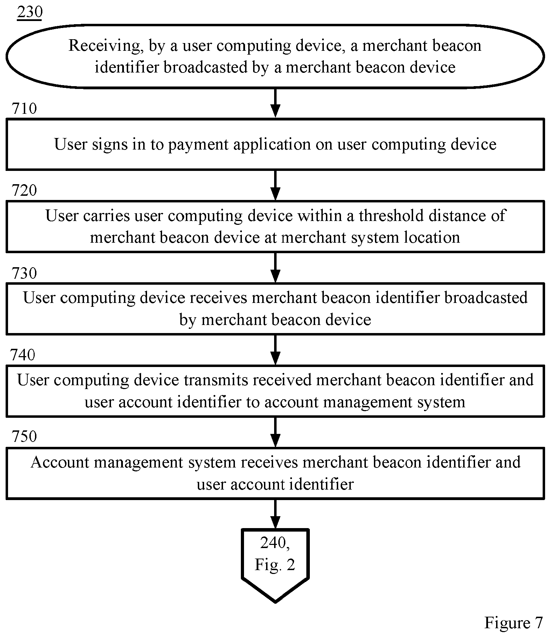

Returning to block 230, in Figure 2, the user device receives a merchant beacon device 120 identifier. The method for receiving, by a user computing device 110, a merchant beacon identifier broadcast by a merchant beacon device 120 is described in more detail hereinafter with reference to the method 230 described in Figure 7.

Figure 7 is a block diagram depicting a method 230 for receiving, by a user computing device 110, a merchant beacon identifier broadcast by a merchant beacon device 120, in accordance with certain examples. The method 230 is described with reference to the components illustrated in Figure 1.

In block 710, the user 101 signs in to the payment application 113 on the user computing device 110. In an example, the user 101 may have a username and password associated with the user 101 account maintained by the account management system 160. In an example, the user 101 opens the payment application 113 on the user computing device 110 and enters a username and/or password via the user interface 115 to sign in to the payment application 113. In an example, when the user 101 is signed in to the payment application 113, the payment application is able to communicate with the account management system 160 over the network 120. In this example, when the user 101 is not signed in to the payment application 113, the payment application does not communicate with the account management system 160 even if the a network 120 connection is available. In an example, the user 101 may sign out of the payment application 113 at any time by actuating one or more objects on the user interface 115 of the user computing device 110. In an example, after signing in to the payment application 113, the user 101 configure one or more user 101 account settings, add, edit, or delete user 101 payment account information, and/or change user 101 preferences. In certain examples, a user 101 may be required to make a feature selection to obtain the benefits of the techniques described herein. For example, the user 101 may have to enable one or more user 101 account settings to enable hands free transactions according to the methods described herein.

In an example, payment application 113 may provide options, data, configurable alerts, and other suitable features to the user 101. For example, the payment application 113 may comprise a listing of merchant systems and merchant locations that participate in hands free payment transactions according to one or more of the methods described herein. The listing may be updated periodically from the account management system 160. The payment application 113 may notify the user 101 when the user 101 is within a configured vicinity of a participating merchant system. The payment application 113 may provide the user 101 with options to update payment preferences. The payment application 113 may provide the user 101 with a listing of recent transactions. The payment application 113 may provide any other suitable information to the user 101.

In block 720, the user 101 carries the user computing device 110 within a threshold distance of the merchant beacon device 120 at the merchant system location. In an example, the user 101 enters a location of the merchant system. The user 101 may enter the merchant location carrying the user computing device 110 in a pocket or a bag, in the hands of the user 101, or in any suitable manner. The location of the merchant system may be a store location, a kiosk location, or any suitable physical location of a merchant system. In another example, a merchant POS operator 102 may be mobile and arrive at a location of the user 101. For example, the merchant system may be a restaurant and the merchant POS device operator 102 may be a delivery person possessing a portable merchant POS device 130.

In certain examples, the payment application 113 may alert the user 101 when the user 101 is in the vicinity of a merchant system that accepts hands-free payments. The alert may be provided via a message on the user computing device 110, via an email or a text, or in any suitable manner. In an example, the alert may be based on the location of the user 101 as determined by a GPS module (not depicted) resident on the user computing device 110. For example, the payment application 113 accesses the GPS data from the GPS module and compare the GPS location to a list of locations of merchant systems that accept hands free payments. For example, the payment application 113 comprises a list or accesses a list maintained by the account management system 160 of merchant system locations that accept hands free payments. If a match results from the comparison, then an alert is generated and provided to the user 101. The match may result if the user 101 is within a configured distance of a qualified merchant system location. In an example, the alerts may be configured to alert in any suitable manner. In an example, the alerts may be combined in commercially dense environments or the alerts may be presented individually. In another example, the alerts may be configured to only alert the user 101 a configured number of times. For example, the alert may be presented three times, but upon a fourth instance, the alert is not presented. The alerts may be presented as a notification with an audible alert, a vibration, a popup alert on the user interface 115 of the user computing device 110, or other suitable alert.

In block 730, the user computing device 110 receives a merchant beacon identifier broadcast by the merchant beacon device 120. The user computing device 110 recognizes a merchant beacon device 120 via wireless communication at the location of the merchant system. The user computing device 110 may be configured to search for beacons or other wireless signals. In an example, the user computing device 110 and the merchant beacon device 120 establish a BLE wireless network 120 connection. In other examples, the user computing device 110 and the merchant beacon device 120 establish a Bluetooth, Wi-Fi, NFC, or other appropriate network 120 connection. Upon entering the range of the signal of the merchant beacon device 120, the user computing device 110 receives the merchant beacon identifier.

In block 740, the user computing device 110 transmits the received merchant beacon identifier and a user 101 account identifier to the account management system 160. In an example, the user computing device 110 transmits the data received in the merchant beacon identifier along with a user 101 account identifier to the account management system 160 over the network 120.

In block 750, the account management system 160 receives the merchant beacon identifier and the user 101 account identifier. For example, the account management system 160 receives the merchant beacon identifier and the user 101 account identifier over the network 120. The user computing device 110 may compare the data from the merchant beacon identifier to a database of merchant beacon identifier data and merchant camera device identifier data to determine an identity of the merchant system and merchant camera device 140 associated with the merchant beacon identifier and/or to verify the authenticity of the beacon.

From block 750, the method 230 proceeds to block 240 in Figure 2.

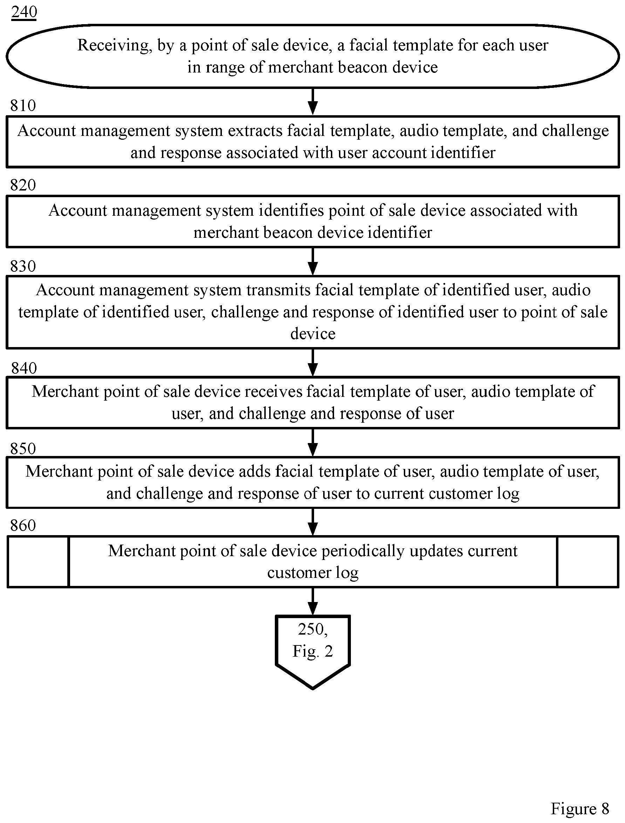

Returning to Figure 2, in block 240, the merchant point of sale device 130 receives a facial template for each user 101 in range of the merchant beacon device 120. The method for receiving, by a merchant camera device 140, a facial template for each user 101 in range of the merchant beacon device 120 is described in more detail hereinafter with reference to the method 240 described in Figure 8. In other examples, in addition to or instead receiving the facial template, the merchant point of sale device 130 receives an audio template and/or a challenge and response associated with the user 101 account.

Figure 8 is a block diagram depicting a method 240 for receiving, by a merchant camera device 140, a facial template for each user 101 in range of the merchant beacon device 120, in accordance with certain examples. The method 240 is described with reference to the components illustrated in Figure 1. In other examples, in addition to or instead receiving the facial template, the merchant point of sale device 130 receives an audio template and/or a challenge and response associated with the user 101 account according to a similar method.

In block 810, the account management system 160 extracts a facial template, audio template, and/or challenge and response associated with the user 101 account identifier. In an example, the account management system 160 accesses a database comprising stored facial templates of a plurality of users 101 with corresponding user 101 account identifiers for each user 101. For example, this database is stored in the data storage unit 166. In another example, the account management system 160 extracts an audio template and/or a challenge and response instead of or in addition to the facial template from the database.

In block 820, the account management system 160 identifies a merchant point of sale device 130 associated with the merchant beacon device 120 identifier. In an example, the account management system 160 recognizes that the merchant beacon identifier is associated with the account management system 160 and a particular merchant point of sale device 130 at the merchant system location. In an example, the account management system 160 recognizes that the merchant beacon identifier is associated with a plurality of merchant point of sale device 130 installed at a particular merchant location.

In block 830, the account management system 160 transmits the facial template of the identified user 101, the audio template of the identified user 101, and/or the challenge and response associated with the identified user 101 to the merchant point of sale device 130 associated with the merchant beacon device 120 identifier. In another example, the account management system 160 transmits the facial template of the identified user 101 to a plurality of merchant point of sale devices 130 associated with the merchant beacon device 120 identifier. In certain examples, the account management system 160 receives, in real time, a plurality of transmissions from user computing devices 101 corresponding to a plurality of users 101 present at the merchant system location, each transmission comprising a user 101 account identifier and a retransmitted merchant beacon identifier. In these examples, the account management system 160 retrieves, in response to receiving each such transmission, a facial template associated with the received user 101 account identifier and transmits a facial template to one or more merchant point of sale devices 130 at the merchant location associated with the merchant beacon identifier. In other examples, in addition to or instead transmitting facial template, the account management system 160 transmits an audio template and/or a challenge and response associated with the user 101 account to one or more merchant point of sale devices 130.

In block 840, the merchant point of sale device 130 receives the facial template of the user 101. In another example, in addition to or instead receiving the facial template, the merchant point of sale device 130 receives an audio template and/or a challenge and response associated with the user 101 account. In another example, a plurality of merchant point of sale devices 130 receive the facial template of the user 101. In yet another example, the merchant point of sale devices and/or the plurality of merchant point of sale devices 130 receive one or more additional facial templates, audio templates, and/or challenges and responses from the account management system 160 corresponding to one or more users 101 other than the instant user 101 having user computing devices 110 in network 120 connection to a merchant beacon device 120 according to the method previously described herein. For example, the one or more additional facial templates, audio templates, and/or challenges and associated responses are received in real time from the account management system 160 as additional users 101 other than the instant user 101 receive the merchant beacon device 120 identifier over a wireless communication network 120 or otherwise establish a network 120 connection between their user computing devices 110 and one or more merchant beacon devices 120. For example, the one or more merchant point of sale devices 130 may receive one or more additional facial templates, audio templates, and/or challenges and responses corresponding to one or more additional users 101 at a time before, at the same time, or after the time at which the merchant point of sale devices 130 receives the facial template of the instant user 101.

In block 850, the merchant point of sale device 130 adds the facial template of the user 101 to a current customer log. In an example, the merchant point of sale device 130, in addition to or instead of the facial template of the user 101, the merchant point of sale device 130 adds an audio template and/or a challenge and response associated with the user 101 to the current customer log. In an example, the current customer log is accessible by the merchant point of sale device 130 and by the account management system 160. In an example, the merchant point of sale device 130 maintains the current customer log on the merchant point of sale device 130 or on a computing device logically connected to the merchant point of sale device 130.

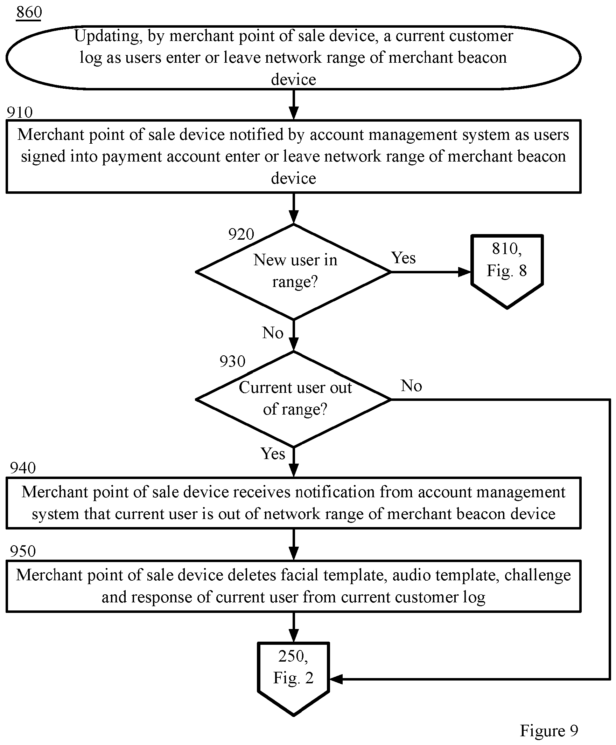

In block 860, the merchant point of sale device 130 periodically updates the current customer log. The method for updating, by a merchant point of sale device 130, a current customer log as users 101 enter or leave a network range of a merchant beacon device 120 is described in more detail hereinafter with reference to the method 860 described in Figure 9.

Figure 9 is a block diagram depicting a method 860 for receiving, by a merchant camera device 140, notification from an account management system 160 as users 101 enter or leave a network range of a merchant beacon device 120, in accordance with certain examples. The method 860 is described with reference to the components illustrated in Figure 1.

In block 910, the merchant point of sale device 130 is notified by the account management system 160 as users 101 signed into a payment account enter or leave a network range of the merchant beacon device 120. For example, as previously discussed, when a user 101 carrying a user computing device 110 enters a threshold distance from a merchant beacon device 120, the merchant beacon device 120 or the user computing device 110 of the user 101 are able to detect the other device and establish a wireless network 120 connection between the two devices at the merchant system location. In this example, the merchant beacon device 120 transmits the merchant beacon identifier corresponding to the merchant beacon device 120 over the wireless network 120 to the user computing device 110. For example, the merchant beacon device 120 transmits the merchant beacon identifier to the user computing device 110 via a BLE, Bluetooth, Wi-Fi, or NFC wireless communication network 120. In this example, the user computing device 110 retransmits the received merchant beacon identifier to the account management system 160 along with a user 101 account identifier identifying the user 101.

In block 920, the account management system 160 determines whether a new user 101 is in range of the merchant beacon device 120. For example, if the account management system 160 receives a new user 101 account identifier in addition to the same merchant beacon identifier, the account management system 160 may determine that a new user 101 is in range of the merchant beacon device 120. In this example, the account management system 160 may infer that the new user 101 has entered the merchant location based on receipt of the new user 101 account identifier. In another example, if the account management system 160 does not receive any new user 101 account identifiers along with the same merchant beacon identifier within a threshold length of time, the account management system 160 may determine that no new users 101 have entered the network 120 range of the merchant beacon device 120.

If a new user 101 is in range of the merchant beacon device 120, the method 860 proceeds to block 810 in Figure 8. For example, the account management system 160 receives a new user 101 account identifier in addition to the same merchant beacon identifier. In this example, the account management system 160 infers that the new user 101 has entered the merchant location based on receipt of the new user 101 account identifier and the same merchant beacon identifier as previously received from the first user 101.

Returning to Figure 8, in block 810, the account management system 160 extracts a facial template associated with the new user 101 account identifier. In another example, the account management system 160, in addition to or instead of the facial template associated with the new user 101, the account management system 160 extracts an audio template and/or a challenge and response associated with the new user 101. In an example, the account management system 160 transmits the facial template, audio template, and/or challenge and response to the appropriate one or more merchant point of sale devices 130 and the one or more merchant point of sale devices 130 add the new user's 101 facial template, audio template, and/or challenge and response to the current customer log according to the example method previously described in method 240 in Figure 8.

Returning to Figure 9, in block 920, if there is a not a new user 101 in range of the merchant beacon device 120, the method 860 proceeds to block 930. For example, the account management system 160 does not receive any new user 101 account identifiers along with the same merchant beacon identifier within a threshold length of time and determines that no new users 101 have entered the network 120 range of the merchant beacon device 120.

In block 930, the merchant camera device 140 determines whether a current user 101 has moved out of range of the merchant beacon device 120. In an example, the user computing device 110 continues to receive from the merchant beacon identifier from the merchant beacon device 120 and retransmit the merchant beacon identifier along with the user 101 account identifier to the account management system 160. In this example, the user computing device 110 may periodically transmit information comprising the merchant beacon identifier and user 101 account identifier to the account management system 160 as long as the user computing device 110 continues to detect the merchant beacon device 120 and receive the merchant beacon device 120 identifier via periodic scans. For example, the user computing device scans for the merchant beacon device 120 every five seconds. In another example, the user computing device 110 may periodically transmit information comprising the merchant beacon identifier and user 101 account identifier to the account management system 160 as long as the user computing device 110 maintains a wireless network 120 connection with the merchant beacon device 120. For example, the user computing device 110 may transmit this information to the account management system 160 at every five seconds. In this example, if the account management system 160 ceases to receive the information from the user computing device for a predefined number of intervals, the account management system 160 may determine that the corresponding user 101 has moved out of range of the merchant beacon device. In this example, if the account management system 160 continues to receive the information transmitted by the user computing device 110 at the expected intervals, the account management system 160 determines that the user 101 is still in network 120 range of the merchant beacon device 120.

If no current user 101 has moved out of range of the merchant beacon device 120, the method 860 proceeds to block 260 in Figure 2. For example, the account management system 160 continues to receive the merchant beacon identifier and user 101 account identifier transmitted by the user computing device 110 at the expected intervals and determines that the user 101 is still in network 120 range of the merchant beacon device 120.

Returning to block 250, in Figure 2, the merchant POS device 130 identifies the user 101 via facial recognition.

Returning to Figure 9, in block 930, if a current user 101 has moved out of range of the merchant beacon device 120, the method 860 proceeds to block 940.

In block 940, the merchant camera device 140 receives a notification from the account management system 160 that a current user 101 is out of network range of the merchant beacon device 120. In another example, the merchant point of sale device 130 receives a notification from the account management system 160 that the user computing device 110 associated with the current user 101 has stopped sending notifications to the account management system 160 comprising the merchant beacon device 120 identifier. For example, the merchant point of sale device 130 receives the user 101 account identifier associated with the current user 101 associated with a user computing device 110 that is either out of network range or has stopped transmitting notifications comprising the merchant beacon device 120 identifier to the account management system 160, accesses the current customer log, and finds an entry corresponding to the current user 101. For example, the current customer log is maintained by the account management system 160 and the merchant point of sale device 130 accesses the current customer log over the network 120 by communicating with the account management system 160. In another example, the account management system 160 does not transmit a notification to the merchant point of sale device 130 that the current user 101 is out of network range. In this example, the account management system 160 accesses the current customer log and deletes the facial template of the current user 101 from the current customer log. In another example, in addition to deleting the facial template of the current user 101 from the current customer log, the merchant point of sale device 130 deletes the audio template and/or the challenge and response associated with the current user 101 from the current customer log.

In block 950, the merchant point of sale device 130 deletes the facial template of the current user 101 from the current customer log. For example, the current customer log comprises a table and the merchant point of sale device 130 deletes or requests the deletion of an entry or row corresponding to data associated with the current user 101 for which the point of sale device 130 received the notification. In another example, the merchant point of sale device 130 deletes, in addition to the facial template of the current user 101, the associated audio template and/or associated challenge and response of the current user 101 from the current customer log. In another example, the account management system 160 accesses the current customer log and deletes the facial template, audio template, and/or challenge and response of the current user 101 from the current customer log. In this context, at a time after adding the facial template associated with the user 101 account to the log of current customer log at the location, the account management systems 160 may receive (second) location data from the user computing device 110. Upon determining that the second location data indicates a location of the user computing device 110 greater than a threshold distance from the location of the merchant point of sale device 130 the facial template associated with the user 101 account is removed by the account management system 160 from the log of current customers at the location. In yet another example, which may be naturally combined with the examples given above the account management system 160, at a time after adding the facial template associated with the user account of the log of current customers at the location, determines that subsequent location data has not been received from the user computing device 110. In response to determining that subsequent location data has not been received from the user computing device 110, the account management system 160 then removes the facial template from the log of current customers at the location.

From block 950, the method 860 proceeds to block 250, in Figure 2.

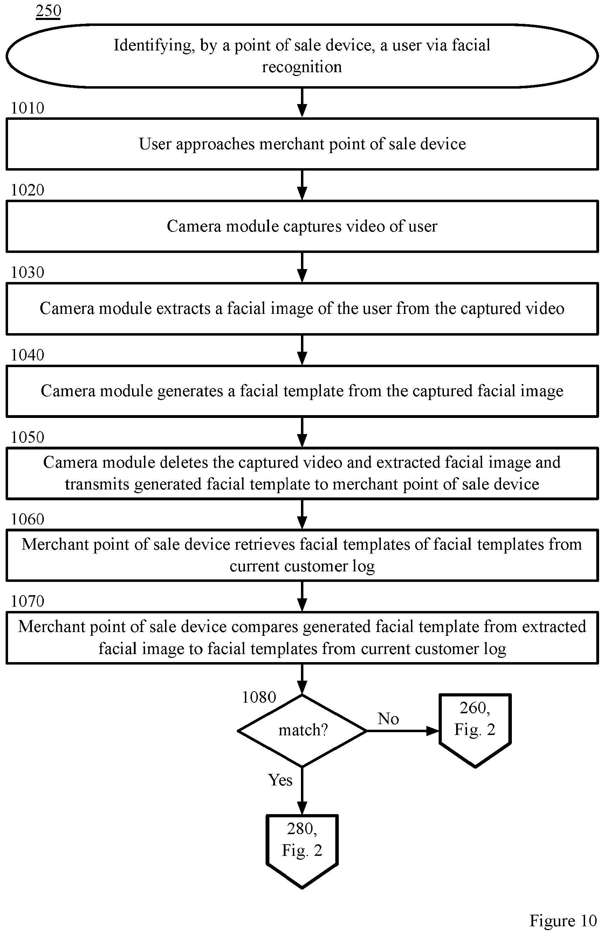

Returning to Figure 2, in block 250, the merchant point of sale device 130 identifies the user 101 via facial recognition. The method for identifying, by a merchant point of sale device 130, a user 101 via facial recognition is described in more detail hereinafter with reference to the method 250 described in Figure 10.

Figure 10 is a block diagram depicting a method 260 for identifying, by the merchant point of sale device 130, a user 101 via facial recognition and receiving a payment token, in accordance with certain examples. The method 260 is described with reference to the components illustrated in Figure 1. In the examples described herein, the merchant point of sale device 130 identifies the user 101 via facial recognition and receives a payment token at a time before the user 101 initiates a transaction at the merchant point of sale device 130. In other examples, the merchant point of sale device 130 identifies the user 101 and receives a payment token in response to receiving, by the merchant POS device 130, one or more inputs by an operator of the merchant POS device 130. For example, the one or more inputs may be the operator totaling the user's 101 merchandise for purchase.

In block 1010, the user 101 approaches the merchant point of sale device 130. In an example, at a time prior to approaching the merchant POS device 130, the user 101 browses the merchant system location and selects one or more items to purchase. In this example, the user 101 may collect the one or more items and carry, or otherwise transport via physical basket or shopping cart, the one or more items to the merchant POS device 130. In this example, the user 101 carries or otherwise has in his possession the user computing device 110 that is retransmitting the merchant beacon device 120 identifier to the account management system 160. Further, in this example, the user 101 facial template, audio template, and/or challenge and response associated with the user 101 account are transmitted by the account management system 160 to the merchant point of sale device 130 and stored in the current customer log accessible to the merchant point of sale device 130.

In block 1020, a camera module 132 of the merchant point of sale device 130 captures video of the user 101. In an example, in response to receiving a request to identify the user 101, the merchant point of sale device 130 activates the camera module 132 to begin to capture a video of the surroundings of the merchant point of sale device 130. In an example, the merchant POS device 130 captures a video feed of the user's 101 face. In another example, the camera module 132 continuously captures, but does not record, a video feed of its surroundings. In this example, when the merchant point of sale device 130 receives an input from the merchant POS device 130 operator 102, a request to identify the user 101 from the account management system 160, the camera module 132 beings to record the video feed for a threshold amount of time. In an example, the user 101 may be moving during the period in which the camera module 132 records the video feed. In an example, the camera module 132 extracts a facial image by determining a particular frame of the video feed and area of the instance of the video feed corresponding to the face of the user.

In block 1030, the camera module 132 extracts a facial image of the user 101 from the captured video. In an example, the camera module 132 determines a frame of the captured video to provide an image of the user's 101 face and extracts the frame of the captured video comprising the facial image of the user 101.

In certain other examples, the camera module 132 determines a frame of the captured video to provide an image of the faces of a plurality of users 101. For example, the frame comprises an image of the face of a first user 101, a second user 101, and a third user 101 at different locations in the image. In this example, one camera module 132 associated with a particular merchant point of sale device 130 may capture video of an environment corresponding to an area in the proximity of multiple merchant POS devices 130. In this example, the camera module 132 may determine to which particular merchant POS device 130 each of the plurality of faces of the corresponding plurality of users 101 in the extracted image.

In block 1040, the camera module 132 generates a facial template from the captured facial image. In another example, the merchant point of sale device 130 generates the facial template. In an example, the facial template is of a predetermined size, for example, a 128-byte facial template. In an example, the account management system 160 generates a facial template comprising a computer code representation of the digital facial image. For example, the facial template may describe key features of the facial image of the user 101, such as shape, color, line, value, space, form, texture, or other useful or relevant feature of the image or of particular regions of the image. In another example, the facial template is generated by processing the facial image through a convolutional neural network. In an example, the camera module 132 stores the generated facial template in a data storage unit 146 associated with the merchant point of sale device 130. For example, the camera module 132 database may comprise a log of facial templates of current customers wherein the merchant point of sale device 130 stores the generated facial template.

In certain other examples, the camera module 132 continuously captures a video feed of its surroundings as users 101 enter and leave the vicinity of one or more merchant POS devices 130 over the course of a certain time period. In this example, the merchant point of sale device 130 and/or camera module 132 is able to continuously monitor the incoming video feed to detect faces from extracted frames of the video feed. In this example, the camera module 132, each time the camera module 132 detects the presence of one or more faces in the video feed, the camera module 132 extracts a frame of the video feed comprising one or more facial images of one or more corresponding detected faces and creates facial templates based on the extracted one or more facial images. In this example, the merchant point of sale device 130 stores facial templates in the log of facial templates of current customers as they are generated. In this example, as the camera module 132 or the merchant point of sale device 130 generates a subsequent facial templates, the merchant point of sale device 130 determines whether the generated subsequent facial template is similar to within a threshold compared to any of the facial templates already stored in the log of facial templates of current customers. If the generated subsequent facial template is similar to within a threshold to any of the facial templates already stored in the log, the merchant point of sale device, after associating the facial template to one or two particular merchant POS devices 130 based on the position of the associated facial images in the extracted frame of the captured video, adds the facial template to the log of facial templates of current customers. If the generated subsequent facial template is not similar to within a threshold to any facial templates already stored in the log of facial templates of current customers, the merchant point of sale device 130 deletes or otherwise ignores and/or does nothing with the generated facial template. In this example, if the merchant point of sale device 130 determines that certain facial image is no longer in the field of the video feed, the corresponding facial template is deleted from the log of facial templates of current customers.

In block 1050, the camera module 132 deletes the captured video and the extracted facial image. For example, the camera module 132 does not store captured images or video. In this example, facial templates generated by the camera module 132 comprise computer code representations of facial images of users 101. In this example, after generating a facial template or after a threshold time has passed after capturing video or images or extracting an image from a video, the merchant camera device 140 deletes any captured or extracted video or images.

In block 1060, the merchant point of sale device 130 retrieves facial templates from the current customer log. For example, the current customer log comprises facial templates received from the account management system 160 corresponding to all current users 101 whose associated user computing devices 110 are located within a network distance of a merchant beacon device 120.

In block 1070, the merchant point of sale device 130 compares the generated facial template from captured facial image to facial templates from the current customer log in order to identify a matching facial template.

In block 1080, the merchant point of sale device 130 determines whether there is a match between the generated facial template and one of the facial templates from the current customer log. In an example, a match comprises a similarity to within a threshold amount between the generated facial template of the user 101 to any of the facial templates already stored in the log of facial templates of current customers.

If a facial template from the current customer log matches the generated facial template, the method 250 proceeds to block 280 in Figure 2.

Returning to Figure 2, in block 280, the merchant point of sale device 130 receives a payment token for the identified user 101.

Returning to Figure 10, in block 1080, if no facial template from the current customer log matches the generated facial template, the method 250 proceeds to block 260 in Figure 2.

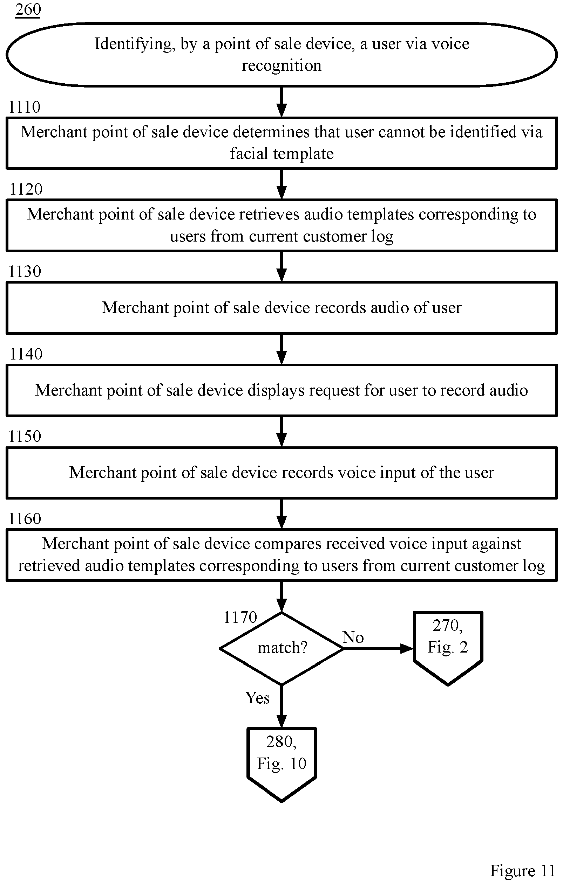

Returning to Figure 2, in block 260, the point of sale device 130 identifies the user 101 via voice recognition. The method for identifying, by an account management system 160, a user 101 via voice recognition is described in more detail hereinafter with reference to the method 260 described in Figure 11. In another example, the account management system 160 does not identify the user 101 via voice recognition and proceeds to identify the user 101 via challenge and response. For example, the merchant camera device 140 and/or account management system 160 is unable to identify the user via facial recognition and/or if the merchant camera device 140 and/or account management system 160 identify two or more users 101 via facial recognition.

Figure 11 is a block diagram depicting a method 260 for identifying, by an account management system 160, a user 101 via voice recognition, in accordance with certain examples. The method 280 is described with reference to the components illustrated in Figure 1.

In certain examples, it may be necessary to identify a user 101 via voice recognition because the merchant point of sale device 130 is not able to identify the user 101 based on facial recognition. For example, the merchant camera module 132 may be unable to extract an adequate facial image of the user 101 from the video feed to generate a facial template. In another example, the merchant point of sale device 130 is unable to find a match for the facial template of the user 101 in the current customer log. In yet another example, the merchant point of sale device 130 identifies a matching user 101 facial template in the current customer log, however, the identified user 101 facial template is assigned to two adjacent merchant POS devices 130. In this example, the user 101 may have to identify himself via voice recognition at the POS device 130 at a time before the user 101 initiates a transaction or at the time that the operator of the merchant POS device 130 actuates one or more user interface objects on the merchant POS device 130, for example, totaling a user's 101 items for purchase.

In block 1110, the merchant point of sale device 130 transmits a notice that the user 101 cannot be identified to the account management system 160.

In block 1120, the merchant point of sale device 130 retrieves audio templates corresponding to users 101 from the current customer log. As previously discussed, when a user 101 establishes an account with the merchant point of sale device 130, the user 101 may submit an audio recording of the user's 101 voice to the merchant point of sale device 130. In this example the merchant point of sale device 130 establishes an audio template corresponding to the user 101 based on the received audio recording. In another examples, the user 101 does not submit an audio recording to the merchant point of sale device 130 at the time the user 101 establishes the user 101 account. In this other example, the merchant point of sale device 130 does not have an audio template associated with the user 101 account and cannot verify the user 101 via voice recognition.

In block 1130, the merchant point of sale device 130 transmits a request to the merchant system point of sale device 130 to record audio of the user 101. For example, the merchant point of sale device 130 transmits the request over the network 120.

In block 1140, the merchant system point of sale device 130 displays the request for the user 101 to record audio. For example, the merchant system POS device 130 may display directions to the user 101 to record an audio recording. For example, the user 101 may be directed to speak the same words in the same intonation as the user 101 did when establishing the audio template with the account management system 160 at the time of setting up the user 101 account.

In block 1150, the merchant system point of sale device 130 records a voice input of the user 101. For example, the merchant POS device operator 102 may actuate an object on the user interface 135 to activate an audio module 131 to receive an audio input of the user 101.

In block 1160, the merchant point of sale device 130 compares the received voice input against the retrieved audio templates corresponding to users 101 from the current customer log. For example, the merchant point of sale device 130 receives the audio input of the user 101.

In block 1170, the merchant point of sale device 130 determines whether there is a match between the received voice input and one of the retrieved audio templates from the current customer log. In an example, the merchant point of sale device 130 compares one or more features between the received voice input and each of the retrieved audio templates from the current customer log. In an example, if the similarity between the received voice input and a particular audio template exceeds a predefined threshold, the merchant point of sale device 130 determines that the received voice input matches the particular audio template. In another example, if the similarity between the received voice input and the particular audio template is less than the predefined threshold, the merchant point of sale device 130 determines that the received voice input does not match the particular audio template.

If an audio template from the current customer log matches the received voice input, the method 260 proceeds to block 280 in Figure 2. For example, the similarity between a particular audio template from the current customer log and the received audio recording of the user 101 exceeds a predefined threshold and the merchant point of sale device 130 determines that there is a match and requests a payment token associated with the identified user 101.

Returning to block 1170, if none of the audio templates from the current customer log matches the received voice input, the method 260 proceeds to block 270 in Figure 2. In another example, the merchant POS device 130 is unable to receive an audio recording of the user 101 or the received audio recording of the user 101 is inadequate and cannot be used to identify the user 101.

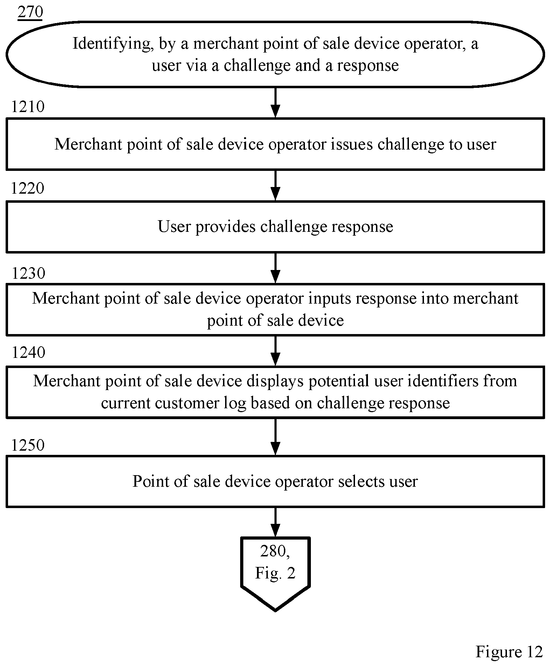

Returning to Figure 2, in block 270, the user 101 is identified by the merchant system POS operator 102 via a challenge and a response. The method for identifying, by a merchant point of sale device operator 102, a user 101 via a challenge and a response is described in more detail hereinafter with reference to the method 270 described in Figure 12.

Figure 12 is a block diagram depicting a method 270 for identifying, by a merchant point of sale device operator 102, a user 101 via a challenge and a response, in accordance with certain examples. The method 270 is described with reference to the components illustrated in Figure 1.

In block 1210, the point of sale device operator 102 issues a challenge to the user 101. In an example, the merchant POS device operator 102 asks the user 101 for the initials of the user 101. In another example, the merchant POS device operator 102 asks the user 101 for the last four digits of the phone number of the user 101. In another example, the merchant POS device operator 102 asks the user 101 for a configured password. Any suitable challenge may be issued by the merchant POS device operator 102. In an example, the response to the challenge does not provide any secure or private information.

In block 1220, the user 101 provides a challenge response. As described in the example challenges, the responses may be the initials of the user 101, the last four digits of the phone number of the user 101, or a configured password. Any configured challenge response may be utilized. In certain embodiments, the response may be a spoken response, a hand gesture, a keypad entry, a display of an identification card, or any suitable response.

In block 1230, the point of sale device operator 102 inputs the response into the merchant point of sale device 130. The merchant POS device operator 102 inputs the challenge response of the user 101. In an example, if the user 101 indicates that the initials of the user 101 are "AC," then the merchant POS device operator 102 inputs "AC" into the payment application 133 of the merchant POS device 130. In an example, the user interface 135 of the merchant POS device 130 displays a request for an entry of the response of the user 101. The merchant POS device operator 102 enters the response via a virtual or physical keyboard, voice dictation, or in any suitable manner. In an alternate example, the user 101 enters the response into the user interface 135 of the merchant POS device 130.

In block 1240, the merchant point of sale device 130 displays potential users 101 based on the challenge response. The merchant POS device 130 displays potential users 101 based on the challenge response. A list of users 101 that are associated with the challenge response are displayed on the merchant POS device 130 to the merchant POS device operator 102. For example, if ten customers are in the vicinity of the merchant beacon device 120, then the merchant POS device 130 may have received from the account management system 160 a challenge response associated with each of the respective ten customers. When the merchant POS device 130 receives the challenge response input, only the potential users 101 that are associated with the challenge response are displayed to the merchant POS device operator 102. In another embodiment, the merchant POS device 130 or the account management system 160 which processes the challenge, presents additional challenges until there is a single matching user 101 remaining.

In the example, if the merchant POS device operator 102 inputs "AC" as the initials of the user 101 associated with the transaction, then only the potential users 101 with those initials will be displayed to the merchant POS device operator 102 by the payment application 133. The payment application 133 accesses a database on the account management system 160 or another computing device and identifies the initials of the potential users 101 that have provided tokens. The payment application 133 identifies the one or more potential users 101 that have the initials "AC" and displays the identified user 101 accounts to the merchant POS device operator 102. In the example, two of the ten customers that are in the vicinity of the merchant beacon device 120 have the initials "AC." The user 101 accounts of the two customers are displayed to the merchant POS device operator 102.

In certain examples, all of the nearby customers who have had tokens transmitted to the merchant POS device 130 are presented to the merchant POS device operator 102 and the merchant POS device operator 102 selects the appropriate user 101 account.

The payment application 133 may display a picture of the potential user 101 accounts that are presented to the merchant POS device operator 102. For example, each user 101 may associate a picture with a user 101 account. When the merchant POS device 130 presents the one or more potential user 101 accounts to the merchant POS device operator 102, the merchant POS device operator 102 may select the appropriate user 101 account based on the picture matching the user 101 conducting the transaction. Other identifying information may be presented instead of, or in addition to, a picture. For example, the name of the user 101 may be displayed and the merchant POS device operator 102 may identify the potential user 101 with that name. Any other suitable identifying information may be presented.

In block 1250, the merchant point of sale device operator 102 selects the user 101 account for use in a transaction. After identifying the displayed picture of the user 101, the merchant POS device operator 102 may input a selection of the user 101 by actuating a user interface 135 control associated with the picture, or by inputting the selection in any suitable manner. If the picture doesn't match any of the potential users, then the merchant POS device operator 102 may cancel the transaction, notify the user 101 of the discrepancy, or perform any other suitable action.

In an example, only a single user 101 account is presented in the list of potential users 101. If only a single user 101 account is identified, then the method may proceed after the merchant POS device operator 102 verifies that the displayed picture matches the user 101. If the picture doesn't match, then the merchant POS device operator 102 may cancel the transaction, notify the user 101 of the discrepancy, or perform any other suitable action.

From block 1250, the method 270 proceeds to block 280 in Figure 2.

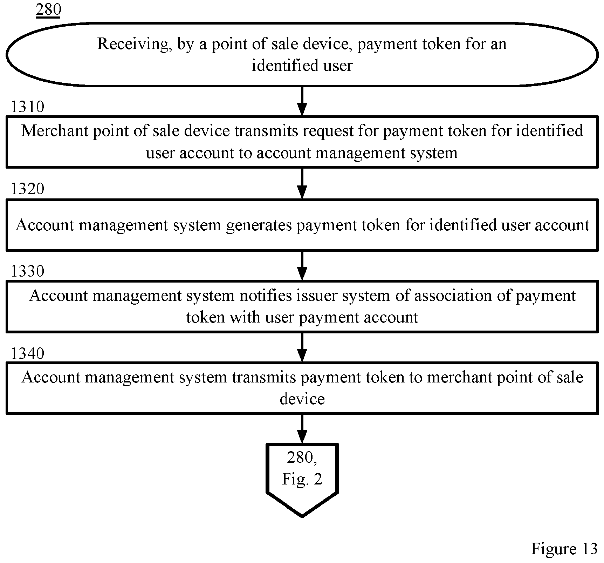

Returning to Figure 2, in block 1280, if a facial template of the user 101 from the current customer log matches the generated facial template, if an audio template from the current customer log matches the generated audio template of the user 101, or if a challenge and response received by the merchant POS device 130 from the user 101 matches the challenge and response in the current customer log associated with the user 101, the merchant point of sale device 130 receives a payment token for the identified user 101. The method for receiving, by the merchant point of sale device 130, a payment token for the identified user 101 is described in more detail hereinafter with reference to the method 280 described in Figure 13.

Figure 13 is a block diagram depicting a method 280 for receiving, by a merchant point of sale device 130, a payment token for an identified user 101, in accordance with certain examples. The method 1090 is described with reference to the components illustrated in Figure 1.

In block 1310, the merchant point of sale device 130 transmits an identifier associated with the identified user 101. For example, merchant point of sale device 130 identifies the user 101 by facial recognition by comparing a generated facial template against a facial template associated with the user 101 account and stored in the current customer log. In an example, the merchant point of sale device 130 extracts an identifier associated with the facial template of the identified user 101 from the current customer log and transmits the identifier to the account management system 160 along with a request for a payment token for the user 101 account associated with the transmitted identifier. In another example, the merchant point of sale device 130 transmits the facial template associated with the identified user 101 extracted from the current customer log and transmits the facial template to the account management system 160 and the account management system 160 identifies the account of the user 101 based on the received facial template by looking up the user 101 account identifier in a database that correlates user 101 account identifiers with facial templates associated with corresponding user 101 accounts. The merchant point of sale device 130 may transmit other data associated with the user 101 extracted from the current customer log associated with the identified user 101 via the network 120 and the account management system 160 may use any relevant or appropriate means to identify the user 101 account based on the data received from the merchant POS device 130. In other examples, the merchant point of sale device 130 identifies the user 101 via voice recognition or a challenge and response and transmits data associated with the identified user 101 from the current customer log to the account management system 160 and the account management system 160 identifies the user 101 account based on the data received from the merchant point of sale device 130.

In block 1320, the account management system 160 generates a payment token for a user payment account. An example payment token comprises a series of alphanumeric and/or symbolic characters. The example payment token may be associated with a payment account of the user 101 and be recognizable by an issuer system 150 associated with the payment account of the user 101. In an example, the payment account of the user 101 comprises a credit card account and the issuer system 150 comprises a credit card issuer system 150. In an example, the user 101 may configure one or more settings of the user 101 account to specify a particular payment account for use in transactions. In this example, the account management system 160 generates a payment token based on this particular specified payment account that is recognizable to the issuer system 150 associated with the particular specified user 101 payment account.

In block 1330, the account management system 160 notifies the issuer system 150 of the association of the payment token with the user 101 payment account. For example, the account management system 160 generates the payment token and communicates the payment token to an issuer system 150 associated with a payment account of the user 101 along with the user 101 payment account information. In this example, if the issuer system 150, at a later time after receiving the payment token from the account management system 160, receives the payment token from a point of sale device 130 in a payment transaction, the issuer system 150 is able to extract the user 101 payment account information associated with the payment token.

In some examples, the account management system 160 may place restrictions on payment tokens for security reasons or according to one or more configurations of the user 101 account desired by the user 101. For example, the payment token may only be valid for a preconfigured length of time, for example, one hour. In another example, the payment token may only be valid for us in a transaction between the user 101 and a particular merchant system. In yet another example, the payment token is only valid for use within a particular geographic boundary or within a threshold distance from a geographic point. In an example, the account management system 160 communicates one or more of these example restrictions to the issuer system 150 along with the payment token and the issuer system 150 associates these one or more restrictions with the payment token and the user 101 payment account data in a database of the issuer system 150. In an example, the account management system 160 may communicate, to the issuer system 150 along with the payment token and the user 101 account data, a current time stamp representing a time when the payment token was generated to associate with the payment token. In another example, the account management system 160 may communicate, to the issuer system 150 along with the payment token and the user 101 account data, location data describing geographic boundaries and/or threshold distances from geographic points where the payment token may be used in a transaction. In yet another example, the account management system 160 may communicate, to the issuer system 150 along with the payment token and the user 101 account data, a merchant system identifier and instructions that only payment authorization requests originating from merchant systems comprising the merchant system identifier may be approved. In an example, the issuer system 150 associates the payment token, the user 101 payment account data associated with the payment token, the one or more restrictions placed on the payment token by the account management system 160, and/or one or more of location data, time stamp data, merchant system identifier data, or other data that the issuer system 150 may use to determine whether the one or more restrictions on the payment token are satisfied to enable use of the payment token.

In block 1340, the account management system 160 transmits the payment token to the merchant point of sale device 130. In an example, the account management system 160 transmits the payment token associated with the identified user 101 account to the merchant POS device 130 via the network 120. From block 1340, the method 280 proceeds to block 290 in Figure 2.

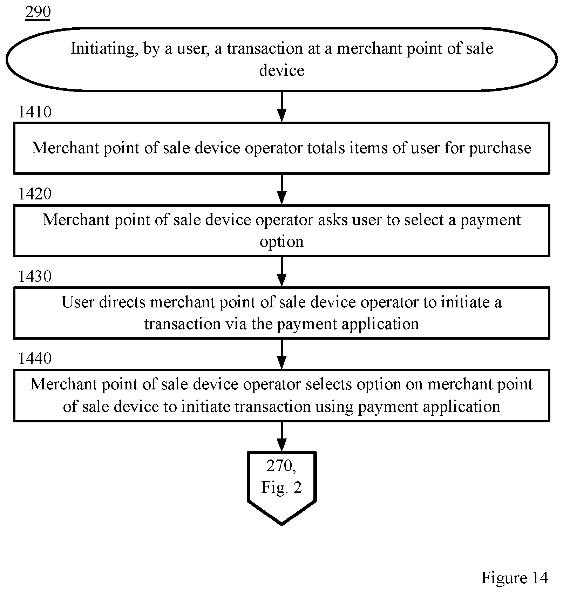

Returning to block 290, in Figure 2, the user 101 initiates a transaction at the merchant point of sale device 130. The method for initiating, by a user 101, a transaction at a merchant point of sale device 130 is described in more detail hereinafter with reference to the method 290 described in Figure 14.

Figure 14 is a block diagram depicting a method 290 for initiating, by a user 101, a transaction at a merchant point of sale device 130, in accordance with certain examples. The method 290 is described with reference to the components illustrated in Figure 1.

In the examples described herein, the merchant point of sale device 130 has already identified the user 101 and the user 101 account associated with the account management system 160 before the user 101 initiates a transaction. In other examples, however, the merchant point of sale device 130 identifies the user 101 via one or more of the example facial recognition, voice recognition, or challenge and response recognition techniques described herein in response to the operator of the point of sale device 130 providing an input to the merchant point of sale device 130. For example, the merchant POS device 130 identifies the user 101 in response to the operator of the merchant POS device 130 operating the merchant POS device to scanning, entering, or totaling one or more items of the user 101 for purchase or in response to any other input received by the merchant POS device 130.

In block 1410, the merchant point of sale device 130 operator 102 totals the items of the user 101 for purchase. In an example, the merchant POS device operator 102 scans barcodes attached to the one or more items or otherwise enters descriptions and prices associated with the one or more items into the merchant POS device 130. In an example, after scanning or manually entering the items into the merchant POS device 130, the merchant POS device operator 102 actuates an object on the user interface 135 of the merchant POS device 130 to order the merchant POS device 130 to total the items. In an example, the merchant POS device 130 displays, via the user interface 135, the total to the user 101.

In block 1420, the merchant point of sale device 130 operator asks the user 101 to select a payment option. In an example, the merchant POS device 130 displays one or more payment options that the user 101 may select to use in a transaction. Example payment options may comprise payment via a payment application 113 associated with the account management system 160, payment by cash, payment by check, payment by credit card, payment by debit card, and/or any other means of payment that the merchant system can or is willing to accept for payment from the user 101. In an example, the one or more payment options are displayed as objects on the user interface 135 and are selectable by the merchant POS device operator 102 in response to the user 101 directing the merchant POS device 102 operator to make a selection. In an example, the merchant point of sale device 130 operator may ask the user 101 if the user 101 wishes to conduct a transaction using the account of the user 101 associated with the account management system 160.

In block 1430, the user 101 directs the merchant point of sale device operator 102 to initiate a transaction via the payment application 113. In an example, in response to receiving a verbal request from the user 101 to select the payment application 113 as a payment option, the merchant POS device operator 102 actuates an object on the user interface 135 of the merchant POS device 130 corresponding to the payment application 113 payment option.

In block 1440, the merchant point of sale device operator 102 selects an option on the merchant point of sale device 130 to initiate a transaction using the payment application 113. In an example, the merchant POS device 130 displays a confirmation screen after the merchant POS device operator 102 selects an option to initiate a transaction using the payment application 113. An example confirmation screen may display information summarizing the potential transaction and comprising one or more of a transaction total, a description of the one or more items being purchased by the user 101, and a indication that the user 101 selected the payment application 113 as the method of payment for the transaction. An example confirmation screen may further display options to confirm the transaction or cancel the transaction. In an example, the user 101 reviews the confirmation screen, determines that the information displayed on the confirmation screen is correct, determines to continue with the transaction, and directs the merchant POS device operator 102 to select the option to confirm the transaction via the user interface 135.

From block 1440, the method 290 proceeds to block 295 in Figure 2.

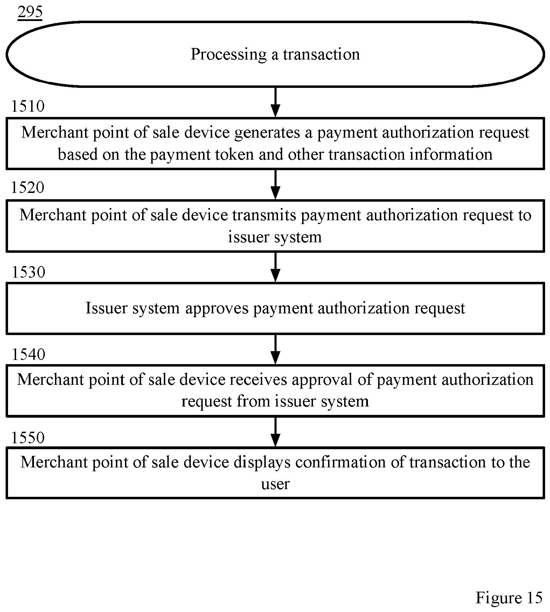

Returning to Figure 2, in block 295, the transaction is processed. The method for processing a transaction is described in more detail hereinafter with reference to the method 295 described in Figure 15.

Figure 15 is a block diagram depicting a method 295 for processing a transaction, in accordance with certain examples. The method 295 is described with reference to the components illustrated in Figure 1.

In block 1510, the merchant point of sale device 130 generates a payment authorization request based on the payment token associated with the identified user 101 or identified user 101 account and other transaction information. In an example, the payment authorization request comprises the payment token received from the account management system 160 for the identified user 101 along with transaction details including a transaction total, a description of one or more items being purchased, a merchant identifier, a merchant payment account identifier, and/or other relevant transaction details. For example, the identified user 101 is the user 101 previously identified by the merchant POS device 130 via facial recognition, voice/audio recognition, or challenge and response.

In block 1520, the merchant point of sale device 130 transmits the payment authorization request to the issuer system 150. For example, the merchant point of sale device 130 communicates the payment authorization request to the issuer system 150 via the network 120. In an example, the payment token associated with the identified user 101 received from the account management system 160 identifies the issuer system 150 to which the merchant POS device 130 should transmit the payment authorization request. In an example, the issuer system 150 is associated with a credit account, bank account, or other account of the user 101.

In block 1530, the issuer system 150 approves the payment authorization request. In an example, the issuer system 150 identifies the user payment account based on the received payment token. For example, the issuer system 150 accesses a database that associates payment tokens with user 101 payment account identifiers. In an example, the database may further associate payment tokens with one or more conditions, such as a length of time for which the payment token is valid. For example, a payment token may only be valid for a threshold length of time, for example one hour, after it is generated by the account management system 130. In this example, as part of the transaction details in the payment authorization request, a current timestamp is received from the merchant point of sale device 130 and the issuer system 150 compares the received timestamp from the transaction details to the one or more time conditions described in the database associated with the payment token and/or one or more data received from the account management system 160 at the time of the receipt of the payment token. In another example, the payment token is valid only for use at a particular merchant system. In this example, the transaction details received with the payment authorization request from the merchant point of sale device 130 identifier comprise a merchant system identifier. In this example, the issuer system 150 determines that the payment token is valid if the merchant identifier received in the transaction details of the payment authorization request match the merchant identifier in the one or more conditions associated with the payment token in the database. In certain other examples, other conditions related to time, location, merchant identifier, or a combination of these conditions and/or other conditions may be specified in the database as associated with one or more particular payment tokens. In an example, the issuer system 150 verifies that a payment token received as part of a payment authorization request is valid based at least in part on data received from the merchant point of sale device 130 and/or data currently available to the issuer system 150. In an example, to process the transaction, the issuer system 150 identifies the user payment account associated with the received payment token in the database processes the transaction using the transaction details and the user payment account information.

In block 1540, the merchant point of sale device 130 receives an approval of the payment authorization request from the issuer system 150. In an example, the issuer system 150 either approves or declines the payment authorization request. In this example, the issuer system 150 may base the decision of whether to approve or decline the payment authorization request based on a total amount of transaction the current available credit of the user 101 for the user 101 payment account. In an example, the merchant point of sale device 130 receives, via the network 120, the approval of the payment authorization request from the issuer system 150 if the issuer system 150 approves the payment authorization request. In another example, the merchant point of sale device 130 receives a notice of declined payment authorization request from the issuer system 150 via the network 120 if the issuer system 150 declines the payment authorization request.

In block 1550, the merchant point of sale device 130 displays a confirmation of the approved transaction to the user 101. An example confirmation of the approved transaction may include a total amount charged to the user 101 payment account, an identification of the user 101 payment account, a merchant system name, and/or other relevant or useful information. In another example, the merchant point of sale device 130 displays a notification of a declined transaction in response to receiving a notice of declined payment authorization request from the issuer system 150. For example, the merchant point of sale device 130 displays a message reading "This transaction has been declined" to the user via the user interface 135 of the merchant point of sale device 130. In another example, the merchant point of sale device 130 prints a receipt for the user 101.

### Other Examples

Figure 16 depicts a computing machine 2000 and a module 2050 in accordance with certain examples. The computing machine 2000 may correspond to any of the various computers, servers, mobile devices, embedded systems, or computing systems presented herein. The module 2050 may comprise one or more hardware or software elements configured to facilitate the computing machine 2000 in performing the various methods and processing functions presented herein. The computing machine 2000 may include various internal or attached components such as a processor 2010, system bus 2020, system memory 2030, storage media 2040, input/output interface 2060, and a network interface 2070 for communicating with a network 2080.

The computing machine 2000 may be implemented as a conventional computer system, an embedded controller, a laptop, a server, a mobile device, a smartphone, a set-top box, a kiosk, a vehicular information system, one more processors associated with a television, a customized machine, any other hardware platform, or any combination or multiplicity thereof. The computing machine 2000 may be a distributed system configured to function using multiple computing machines interconnected via a data network or bus system.

The processor 2010 may be configured to execute code or instructions to perform the operations and functionality described herein, manage request flow and address mappings, and to perform calculations and generate commands. The processor 2010 may be configured to monitor and control the operation of the components in the computing machine 2000. The processor 2010 may be a general purpose processor, a processor core, a multiprocessor, a reconfigurable processor, a microcontroller, a digital signal processor ("DSP"), an application specific integrated circuit ("ASIC"), a graphics processing unit ("GPU"), a field programmable gate array ("FPGA"), a programmable logic device ("PLD"), a controller, a state machine, gated logic, discrete hardware components, any other processing unit, or any combination or multiplicity thereof. The processor 2010 may be a single processing unit, multiple processing units, a single processing core, multiple processing cores, special purpose processing cores, co-processors, or any combination thereof. According to certain embodiments, the processor 2010 along with other components of the computing machine 2000 may be a virtualized computing machine executing within one or more other computing machines.

The system memory 2030 may include non-volatile memories such as read-only memory ("ROM"), programmable read-only memory ("PROM"), erasable programmable read-only memory ("EPROM"), flash memory, or any other device capable of storing program instructions or data with or without applied power. The system memory 2030 may also include volatile memories such as random access memory ("RAM"), static random access memory ("SRAM"), dynamic random access memory ("DRAM"), and synchronous dynamic random access memory ("SDRAM"). Other types of RAM also may be used to implement the system memory 2030. The system memory 2030 may be implemented using a single memory module or multiple memory modules. While the system memory 2030 is depicted as being part of the computing machine 2000, one skilled in the art will recognize that the system memory 2030 may be separate from the computing machine 2000 without departing from the scope of the subject technology. It should also be appreciated that the system memory 2030 may include, or operate in conjunction with, a non-volatile storage device such as the storage media 2040.

The storage media 2040 may include a hard disk, a floppy disk, a compact disc read only memory ("CD-ROM"), a digital versatile disc ("DVD"), a Blu-ray disc, a magnetic tape, a flash memory, other non-volatile memory device, a solid state drive ("SSD"), any magnetic storage device, any optical storage device, any electrical storage device, any semiconductor storage device, any physical-based storage device, any other data storage device, or any combination or multiplicity thereof. The storage media 2040 may store one or more operating systems, application programs and program modules such as module 2050, data, or any other information. The storage media 2040 may be part of, or connected to, the computing machine 2000. The storage media 2040 may also be part of one or more other computing machines that are in communication with the computing machine 2000 such as servers, database servers, cloud storage, network attached storage, and so forth.

The module 2050 may comprise one or more hardware or software elements configured to facilitate the computing machine 2000 with performing the various methods and processing functions presented herein. The module 2050 may include one or more sequences of instructions stored as software or firmware in association with the system memory 2030, the storage media 2040, or both. The storage media 2040 may therefore represent examples of machine or computer readable media on which instructions or code may be stored for execution by the processor 2010. Machine or computer readable media may generally refer to any medium or media used to provide instructions to the processor 2010. Such machine or computer readable media associated with the module 2050 may comprise a computer software product. It should be appreciated that a computer software product comprising the module 2050 may also be associated with one or more processes or methods for delivering the module 2050 to the computing machine 2000 via the network 2080, any signal-bearing medium, or any other communication or delivery technology. The module 2050 may also comprise hardware circuits or information for configuring hardware circuits such as microcode or configuration information for an FPGA or other PLD.

The input/output ("I/O") interface 2060 may be configured to couple to one or more external devices, to receive data from the one or more external devices, and to send data to the one or more external devices. Such external devices along with the various internal devices may also be known as peripheral devices. The I/O interface 2060 may include both electrical and physical connections for operably coupling the various peripheral devices to the computing machine 2000 or the processor 2010. The I/O interface 2060 may be configured to communicate data, addresses, and control signals between the peripheral devices, the computing machine 2000, or the processor 2010. The I/O interface 2060 may be configured to implement any standard interface, such as small computer system interface ("SCSI"), serial-attached SCSI ("SAS"), fiber channel, peripheral component interconnect ("PCI"), PCI express (PCIe), serial bus, parallel bus, advanced technology attached ("ATA"), serial ATA ("SATA"), universal serial bus ("USB"), Thunderbolt, FireWire, various video buses, and the like. The I/O interface 2060 may be configured to implement only one interface or bus technology. Alternatively, the I/O interface 2060 may be configured to implement multiple interfaces or bus technologies. The I/O interface 2060 may be configured as part of, all of, or to operate in conjunction with, the system bus 2020. The I/O interface 2060 may include one or more buffers for buffering transmissions between one or more external devices, internal devices, the computing machine 2000, or the processor 2010.

The I/O interface 2060 may couple the computing machine 2000 to various input devices including mice, touch-screens, scanners, electronic digitizers, sensors, receivers, touchpads, trackballs, cameras, microphones, keyboards, any other pointing devices, or any combinations thereof. The I/O interface 2060 may couple the computing machine 2000 to various output devices including video displays, speakers, printers, projectors, tactile feedback devices, automation control, robotic components, actuators, motors, fans, solenoids, valves, pumps, transmitters, signal emitters, lights, and so forth.

The computing machine 2000 may operate in a networked environment using logical connections through the network interface 2070 to one or more other systems or computing machines across the network 2080. The network 2080 may include wide area networks (WAN), local area networks (LAN), intranets, the Internet, wireless access networks, wired networks, mobile networks, telephone networks, optical networks, or combinations thereof. The network 2080 may be packet switched, circuit switched, of any topology, and may use any communication protocol. Communication links within the network 2080 may involve various digital or an analog communication media such as fiber optic cables, free-space optics, waveguides, electrical conductors, wireless links, antennas, radio-frequency communications, and so forth.

The processor 2010 may be connected to the other elements of the computing machine 2000 or the various peripherals discussed herein through the system bus 2020. It should be appreciated that the system bus 2020 may be within the processor 2010, outside the processor 2010, or both. According to some embodiments, any of the processor 2010, the other elements of the computing machine 2000, or the various peripherals discussed herein may be integrated into a single device such as a system on chip ("SOC"), system on package ("SOP"), or ASIC device.

In situations in which the systems discussed here collect personal information about users, or may make use of personal information, the users may be provided with an opportunity or option to control whether programs or features collect user information (e.g., information about a user's social network, social actions or activities, profession, a user's preferences, or a user's current location), or to control whether and/or how to receive content from the content server that may be more relevant to the user. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over how information is collected about the user and used by a content server.

Embodiments may comprise a computer program that embodies the functions described and illustrated herein, wherein the computer program is implemented in a computer system that comprises instructions stored in a machine-readable medium and a processor that executes the instructions. However, it should be apparent that there could be many different ways of implementing embodiments in computer programming, and the embodiments should not be construed as limited to any one set of computer program instructions. Further, a skilled programmer would be able to write such a computer program to implement an embodiment of the disclosed embodiments based on the appended flow charts and associated description in the application text. Therefore, disclosure of a particular set of program code instructions is not considered necessary for an adequate understanding of how to make and use embodiments. Further, those skilled in the art will appreciate that one or more aspects of embodiments described herein may be performed by hardware, software, or a combination thereof, as may be embodied in one or more computing systems. Moreover, any reference to an act being performed by a computer should not be construed as being performed by a single computer as more than one computer may perform the act.

The examples described herein can be used with computer hardware and software that perform the methods and processing functions described herein. The systems, methods, and procedures described herein can be embodied in a programmable computer, computer-executable software, or digital circuitry. The software can be stored on computer-readable media. For example, computer-readable media can include a floppy disk, RAM, ROM, hard disk, removable media, flash memory, memory stick, optical media, magnetooptical media, CD-ROM, etc. Digital circuitry can include integrated circuits, gate arrays, building block logic, field programmable gate arrays (FPGA), etc.

The example systems, methods, and acts described in the embodiments presented previously are illustrative, and, in alternative embodiments, certain acts can be performed in a different order, in parallel with one another, omitted entirely, and/or combined between different examples, and/or certain additional acts can be performed.

Although specific embodiments have been described above in detail, the description is merely for purposes of illustration. It should be appreciated, therefore, that many aspects described above are not intended as required or essential elements unless explicitly stated otherwise. Modifications of, and equivalent components or acts corresponding to, the disclosed aspects of the examples, in addition to those described above, can be made by a person of ordinary skill in the art, having the benefit of the present disclosure.

## Claims

1. A computer-implemented method (200) to process hands-free service requests with facial recognition of users (101), comprising:
receiving (230), by one or more computing devices (160) and from a user computing device (110) associated with a user account, first location data and a user account identifier;
determining, by the one or more computing devices (160), that the received first location data corresponds to a location comprising a service computing device (130);
adding (850), by the one or more computing devices (160), a user facial template associated with the user account identified by the user account identifier to a log of current customers at the location;
receiving, by the one or more computing devices (160) and from the service computing device (130) at the location, a request for the log of current customers at the location;
transmitting, by the one or more computing devices (160) and to the service computing device (130) at the location, the log of current customers comprising one or more facial templates and comprising at least the user facial template;
receiving, by the one or more computing devices (160) and from the service computing device (130), a request to process a service request and an indication of an identification of user facial template;
extracting, by the one or more computing devices (160), user account data associated with the user account associated with the user facial template; and
processing, by the one or more computing devices (160), a service request based on account data associated with the user account;
**characterised in that** the method further comprises:
at a time after adding (850) the facial template associated with the user account to the log of current customers at the location, receiving, by the one or more computing devices (160) from the user computing device (110), second location data;
determining, by the one or more computing devices (160), that the second location data indicates a location greater than a threshold distance from the location of the service computing device (130); and
removing, by the one or more computing devices (160), the facial template associated with the user account from the log of current customers at the location and/or further comprises:
at a time after adding (850) the facial template associated with the user account of the log of current customers at the location, determining, by the one or more computing devices (160), that subsequent location data has not been received from the user computing device (110); and
in response to determining that subsequent location data has not been received from the user computing device (110), removing, by the one or more computing devices (160), the facial template from the log of current customers at the location.

2. The computer-implemented method of claim 1, further comprising:
receiving (240, 540), by one or more computing devices (160), a first facial image of a user (101);
generating (550), by the one or more computing devices (160), the user facial template comprising a computer code representation of the first facial image; and
associating (550), by the one or more computing devices (160), the generated user facial template with the account of the user (101).

3. The computer-implemented method of claim 1 or 2, wherein the user account data comprises payment account information, wherein the service request comprises a request to process a payment transaction, and wherein processing the service request comprises processing (295) the payment transaction using the payment account information, wherein, optionally, processing (295) the payment transaction using the payment account information comprises:
identifying, by the one or more computing devices (160), an issuer system (150) associated with the payment account information;
generating (1310), by the one or more computing devices (160), a payment token to associate with the payment account information;
transmitting (1340), by the one or more computing devices (160), the payment token and associated payment account information and transaction details to the issuer system (150);
transmitting (1340), by the one or more computing devices (160) and to the service computing device (130), the payment token, wherein the service computing device (130) generates (1510) a transaction authorization request to communicate to the issuer system (150) comprising the payment token and transaction details, wherein the issuer system (150) approves (1530) the transaction authorization request.

4. The computer-implemented method of any one of the preceding claims, wherein the service computing device (130) captures (1020, 1030) an image of a user, generates (1040) a second facial template, and compares (1070, 1080) the generated second facial template against the one or more facial templates in the log of current customers at the location to identify a matching facial template from the log of current customers at the location comprising the user facial template.

5. A computer program product, comprising:
a non-transitory computer-readable medium (2030, 2040) having computer-executable program instructions (2050) embodied thereon for execution by one or more computing devices (160) to process hands-free service requests with facial recognition of users (101), the computer-executable program instructions comprising:
computer-executable program instructions to receive (230), from a user computing (110) device associated with a user account, first location data and a user account identifier;
computer-executable program instructions to determine that the received first location data corresponds to a location comprising a service computing device (130);
computer-executable program instructions to add (850) a user facial template associated with the user account identified by the user account identifier to a log of current customers at the location;
computer-executable program instructions to receive, from the service computing device (130) at the location, a request for the log of current customers at the location;
computer-executable program instructions to transmit, to the service computing device (130) at the location, the log of current customers comprising one or more facial templates and comprising at least the user facial template;
computer-executable program instructions to receive, from the service computing device (130), a request to process a service request and an indication of an identification of user facial template;
computer-executable program instructions to extract user account data associated with the user account associated with the user facial template; and
computer-executable program instructions to process a service request based on account data associated with the user account **characterised in that** the computer-executable program instructions further comprise:
at a time after adding (850) the facial template associated with the user account to the log of current customers at the location, computer-executable program instructions to receive, from the user computing device (110), second location data;
computer-executable program instructions to determine that the second location data indicates a location greater than a threshold distance from the location of the service computing device (130); and
computer-executable program instructions to remove the facial template associated with the user account from the log of current customers at the location and/or further comprise:
at a time after adding (850) the facial template associated with the user account of the log of current customers at the location, computer-executable program instructions to determine that subsequent location data has not been received from the user computing device (110); and
in response to determining that subsequent location data has not been received from the user computing device (110), computer-executable program instructions to remove the facial template from the log of current customers at the location.

6. The computer program product of claim 5, further comprising:
computer-executable program instructions to receive (240, 540) a first facial image of a user (101);
computer-executable program instructions to generate (550) the user facial template comprising a computer code representation of the first facial image; and
computer-executable program instructions to associate (550) the generated user facial template with the account of the user (101).

7. The computer program product of claim 5 or 6, wherein the user account data comprises payment account information, wherein the service request comprises a request to process a payment transaction, and wherein processing the service request comprises processing (295) the payment transaction using the payment account information, wherein, optionally, processing (295) the payment transaction using the payment account information comprises:
identifying an issuer system (150) associated with the payment account information;
generating (1310) a payment token to associate with the payment account information;
transmitting (1330) the payment token and associated payment account information and transaction details to the issuer system (150);
transmitting (1340), to the service computing device (130), the payment token, wherein the service computing device (130) generates (1510) a transaction authorization request to communicate to the issuer system (150) comprising the payment token and transaction details, wherein the issuer system (150) approves (1530) the transaction authorization request.

8. The computer program product of any one of the preceding claims 5 to 7, wherein the service computing device (130) captures (1020, 1030) an image of a user (101), generates (1040) a second facial template, and compares (1070, 1080) the generated second facial template against the one or more facial templates in the log of current customers at the location to identify a matching facial template from the log of current customers at the location comprising the user facial template.

9. A system (160, 2000) to process hands-free service requests with facial recognition of users (101), comprising:
a storage device (2030, 2040);
a processor (2010) communicatively coupled to the storage device (2030, 2040), wherein the processor (2010) executes application code instructions that are stored in the storage device (2030, 2040) to cause the system (160, 2000) to:
receive (230), from a user computing device (110) associated with a user account, first location data and a user account identifier;
determine that the received first location data corresponds to a location comprising a service computing device (130);
add (850) a user facial template associated with the user account identified by the user account identifier to a log of current customers at the location;
receive, from the service computing device (130) at the location, a request for the log of current customers at the location;
transmit, to the service computing device (130) at the location, the log of current customers comprising one or more facial templates and comprising at least the user facial template;
receive, from the service computing device (130), a request to process a service request and an indication of an identification of user facial template;
extract user account data associated with the user account associated with the user facial template; and
process a service request based on account data associated with the user account; **characterised in that** the processor (2010) is further configured to execute application code instructions that are stored in the storage device (2030, 2040) to cause the system (160, 2000) to:
at a time after adding (850) the facial template associated with the user account to the log of current customers at the location, receive, from the user computing device (110), second location data;
determine that the second location data indicates a location greater than a threshold distance from the location of the service computing device (130); and
remove the facial template associated with the user account from the log of current customers at the location;
and/or the processor (2010) is further configured to execute application code instructions that are stored in the storage device (2030, 2040) to cause the system (160, 2000) to:
at a time after adding (850) the facial template associated with the user account of the log of current customers at the location, determine that subsequent location data has not been received from the user computing device (110); and
in response to determining that subsequent location data has not been received from the user computing device (110), remove the facial template from the log of current customers at the location.

10. The system (160, 2000) of claim 9, wherein the processor (2010) is further configured to execute application code instructions that are stored in the storage device (2030, 2040) to cause the system (160, 2000) to:
receive (240, 540) a first facial image of a user (101);
generate (550) the user facial template comprising a computer code representation of the first facial image; and
associate (550) the generated user facial template with the account of the user (101).

11. The system of claim 9 or 10, wherein the user account data comprises payment account information, wherein the service request comprises a request to process a payment transaction, and wherein processing the service request comprises processing (295) the payment transaction using the payment account information, wherein, optionally, processing (295) the payment transaction using the payment account information comprises:
identifying an issuer system (150) associated with the payment account information;
generating (1310) a payment token to associate with the payment account information;
transmitting (1330) the payment token and associated payment account information and transaction details to the issuer system (150);
transmitting (1340), to the service computing device (130), the payment token, wherein the service computing device (130) generates (1510) a transaction authorization request to communicate to the issuer system (150) comprising the payment token and transaction details, wherein the issuer system (150) approves the transaction authorization request.

12. The system (160, 2000) of any one of the preceding claims 9 to 11, wherein the service computing device (130) captures (1020, 1030) an image of a user (101), generates (1040) a second facial template, and compares (1070, 1080) the generated second facial template against the one or more facial templates in the log of current customers at the location to identify a matching facial template from the log of current customers at the location comprising the user facial template.

## Patentansprüche

1. Computerimplementiertes Verfahren (200) zum Verarbeiten von Freisprech-Dienstanforderungen mit Gesichtserkennung von Benutzern (101), umfassend:
Empfangen (230), durch eine oder mehrere Rechenvorrichtungen (160) und von einer Benutzer-Rechenvorrichtung (110), die mit einem Benutzerkonto assoziiert ist, von ersten Standortdaten und einer Benutzer-Kontokennung;
Bestimmen, durch die eine oder die mehreren Rechenvorrichtungen (160), dass die empfangenen ersten Standortdaten einem Standort entsprechen, der eine Dienst-Rechenvorrichtung (130) umfasst;
Hinzufügen (850), durch die eine oder die mehreren Rechenvorrichtungen (160), von einer Benutzer-Gesichtsschablone, die mit dem Benutzerkonto assoziiert ist, das durch den Benutzer-Kontokennung identifiziert ist, zu einem Protokoll von aktuellen Kunden an dem Standort;
Empfangen, durch die eine oder die mehreren Rechenvorrichtungen (160) und von der Dienst-Rechenvorrichtung (130) an dem Standort, einer Anforderung nach dem Protokoll von aktuellen Kunden an dem Standort;
Übertragen, durch die eine oder die mehreren Rechenvorrichtungen (160) und an die Dienst-Rechenvorrichtung (130) an dem Standort, des Protokolls von aktuellen Kunden, umfassend eine oder mehrere Gesichtsschablonen und umfassend mindestens die Benutzer-Gesichtsschablone;
Empfangen, durch die eine oder die mehreren Rechenvorrichtungen (160) und von der Dienst-Rechenvorrichtung (130), einer Anforderung zum Verarbeiten einer Dienstanforderung und einer Angabe einer Identifikation von Benutzer-Gesichtsschablone;
Extrahieren, durch die eine oder die mehreren Rechenvorrichtungen (160), von Benutzer-Kontodaten, die mit dem Benutzerkonto assoziiert sind, das mit der Benutzer-Gesichtsschablone assoziiert ist; und
Verarbeiten, durch die eine oder die mehreren Rechenvorrichtungen (160), einer Dienstanforderung basierend auf Kontodaten, die mit dem Benutzerkonto assoziiert sind;
**dadurch gekennzeichnet, dass** das Verfahren ferner Folgendes umfasst:
an einem Zeitpunkt nach Hinzufügen (850) der Gesichtsschablone, die mit dem Benutzerkonto assoziiert ist, zu dem Protokoll von aktuellen Kunden an dem Standort, Empfangen, durch die eine oder die mehreren Rechenvorrichtungen (160) von der Benutzer-Rechenvorrichtung (110), von zweiten Standortdaten;
Bestimmen, durch die eine oder die mehreren Rechenvorrichtungen (160), dass die zweiten Standortdaten einen Standort angeben, der größer ist als ein Schwellenwertabstand von dem Standort der Dienst-Rechenvorrichtung (130); und
Entfernen, durch die eine oder die mehreren Rechenvorrichtungen (160), der Gesichtsschablone, die mit dem Benutzerkonto assoziiert ist, aus dem Protokoll von aktuellen Kunden an dem Standort und/oder ferner Folgendes umfasst:
an einem Zeitpunkt nach Hinzufügen (850) der Gesichtsschablone, die mit dem Benutzerkonto des Protokolls von aktuellen Kunden an dem Standort assoziiert ist, Bestimmen, durch die eine oder die mehreren Rechenvorrichtungen (160), dass nachfolgende Standortdaten nicht von der Benutzer-Rechenvorrichtung (110) empfangen wurden; und
als Reaktion auf ein Bestimmen, dass nachfolgende Standortdaten nicht von der Benutzer-Rechenvorrichtung (110) empfangen wurden, Entfernen, durch die eine oder die mehreren Rechenvorrichtungen (160), der Gesichtsschablone aus dem Protokoll von aktuellen Kunden an dem Standort.

2. Computerimplementiertes Verfahren nach Anspruch 1, ferner umfassend:
Empfangen (240, 540), durch eine oder mehrere Rechenvorrichtungen (160), eines ersten Gesichtsbilds eines Benutzers (101);
Erzeugen (550), durch die eine oder die mehreren Rechenvorrichtungen (160), der Benutzer-Gesichtsschablone, umfassend eine Computercode-Darstellung des ersten Gesichtsbild; und
Assoziieren (550), durch die eine oder die mehreren Rechenvorrichtungen (160), der erzeugten Benutzer-Gesichtsschablone mit dem Konto des Benutzers (101).

3. Computerimplementiertes Verfahren nach Anspruch 1 oder 2, wobei die Benutzer-Kontodaten Zahlungskontoinformationen umfassen, wobei die Dienstanforderung eine Anforderung zum Verarbeiten einer Zahlungstransaktion umfasst, und wobei ein Verarbeiten der Dienstanforderung ein Verarbeiten (295) der Zahlungstransaktion unter Verwendung der Zahlungskontoinformationen umfasst, wobei optional das Verarbeiten (295) der Zahlungstransaktion unter Verwendung der Zahlungskontoinformationen Folgendes umfasst:
Identifizieren, durch die eine oder die mehreren Rechenvorrichtungen (160), eines Ausgabesystems (150), das mit den Zahlungskontoinformationen assoziiert ist;
Erzeugen (1310), durch die eine oder die mehreren Rechenvorrichtungen (160), eines Zahlungs-Tokens, das mit den Zahlungskontoinformationen assoziiert werden soll;
Übertragen (1340), durch die eine oder die mehreren Rechenvorrichtungen (160), des Zahlungs-Tokens und der assoziierten Zahlungskontoinformationen und Transaktionsdetails an das Ausgabesystem (150);
Übertragen (1340), durch die eine oder die mehreren Rechenvorrichtungen (160) und an die Dienst-Rechenvorrichtung (130), des Zahlungs-Tokens, wobei die Dienst-Rechenvorrichtung (130) eine Transaktionsautorisierungsanforderung erzeugt (1510), die an das Ausgabesystem (150) übermittelt werden soll, umfassend das Zahlungs-Token und Transaktionsdetails, wobei das Ausgabesystem (150) die Transaktionsautorisierungsanforderung genehmigt (1530).

4. Computerimplementiertes Verfahren nach einem der vorherigen Ansprüche, wobei die Dienst-Rechenvorrichtung (130) ein Bild eines Benutzers erfasst (1020, 1030), eine zweite Gesichtsschablone erzeugt (1040) und die erzeugte zweite Gesichtsschablone mit der einen oder den mehreren Gesichtsschablonen in dem Protokoll der aktuellen Kunden an dem Standort vergleicht (1070, 1080), um eine übereinstimmende Gesichtsschablone aus dem Protokoll der aktuellen Kunden an dem Standort zu identifizieren, der die Benutzer-Gesichtsschablone umfasst.

5. Computerprogrammprodukt, umfassend:
ein nicht-transitorisches computerlesbares Medium (2030, 2040), das darauf verkörperte computerausführbare Programmanweisungen (2050) zur Ausführung durch eine oder mehrere Rechenvorrichtungen (160) aufweist, um Freisprech-Dienstanforderungen mit Gesichtserkennung von Benutzern (101) zu verarbeiten, die computerausführbaren Programmanweisungen umfassend:
computerausführbare Programmanweisungen zum Empfangen (230), von einer Benutzerrechenvorrichtung (110), die mit einem Benutzerkonto assoziiert ist, von ersten Standortdaten und einer Benutzer-Kontokennung;
computerausführbare Programmanweisungen, um zu bestimmen, dass die empfangenen ersten Standortdaten einem Standort entsprechen, der eine Dienst-Rechenvorrichtung (130) umfasst;
computerausführbare Programmanweisungen zum Hinzufügen (850) einer Benutzer-Gesichtsschablone, die mit dem Benutzerkonto assoziiert ist, das durch die Benutzer-Kontokennung identifiziert ist, zu einem Protokoll von aktuellen Kunden an dem Standort;
computerausführbare Programmanweisungen, um, von der Dienst-Rechenvorrichtung (130) an dem Standort, eine Anforderung nach dem Protokoll von aktuellen Kunden an dem Standort zu empfangen;
computerausführbare Programmanweisungen zum Übertragen, an die Dienst-Rechenvorrichtung (130) an dem Standort, des Protokolls von aktuellen Kunden, umfassend eine oder mehrere Gesichtsschablonen und umfassend mindestens die Benutzer-Gesichtsschablone;
computerausführbare Programmanweisungen, um, von der Dienst-Rechenvorrichtung (130), eine Anforderung zum Verarbeiten einer Dienstanforderung und eine Angabe einer Identifikation einer Benutzer-Gesichtsschablone zu empfangen;
computerausführbare Programmanweisungen, um Benutzer-Kontodaten zu extrahieren, die mit dem Benutzerkonto assoziiert sind, das mit der Benutzer-Gesichtsschablone assoziiert ist; und
computerausführbare Programmanweisungen, um eine Dienstanforderung basierend auf Kontodaten zu verarbeiten, die mit dem Benutzerkonto assoziiert sind, **dadurch gekennzeichnet, dass** die computerausführbaren Programmanweisungen ferner Folgendes umfassen:
an einem Zeitpunkt nach Hinzufügen (850) der Gesichtsschablone, die mit dem Benutzerkonto assoziiert ist, zu dem Protokoll von aktuellen Kunden an dem Standort, computerausführbare Programmanweisungen, um von der Benutzer-Rechenvorrichtung (110) zweite Standortdaten zu empfangen;
computerausführbare Programmanweisungen, um zu bestimmen, dass die zweiten Standortdaten einen Standort angeben, der größer ist als ein Schwellenwertabstand von dem Standort der Dienst-Rechenvorrichtung (130); und
computerausführbare Programmanweisungen, um die Gesichtsschablone, die mit dem Benutzerkonto assoziiert ist, aus dem Protokoll von aktuellen Kunden an dem Standort zu entfernen und/oder ferner Folgendes umfassen:
an einem Zeitpunkt nach Hinzufügen (850) der Gesichtsschablone, die mit dem Benutzerkonto des Protokolls von aktuellen Kunden an dem Standort assoziiert ist, computerausführbare Programmanweisungen, um zu bestimmen, dass nachfolgende Standortdaten nicht von der Benutzer-Rechenvorrichtung (110) empfangen wurden; und
als Reaktion auf ein Bestimmen, dass nachfolgende Standortdaten nicht von der Benutzer-Rechenvorrichtung (110) empfangen wurden, computerausführbare Programmanweisungen zum Entfernen der Gesichtsschablone aus dem Protokoll von aktuellen Kunden an dem Standort.

6. Computerprogrammprodukt nach Anspruch 5, ferner umfassend:
computerausführbare Programmanweisungen zum Empfangen (240, 540) eines ersten Gesichtsbilds eines Benutzers (101);
computerausführbare Programmanweisungen zum Erzeugen (550) der Benutzer-Gesichtsschablone, umfassend eine Computercode-Darstellung des ersten Gesichtsbilds; und
computerausführbare Programmanweisungen, um die erzeugte Benutzer-Gesichtsschablone mit dem Konto des Benutzers (101) zu assoziieren (550).

7. Computerprogrammprodukt nach Anspruch 5 oder 6, wobei die Benutzer-Kontodaten Zahlungskontoinformationen umfassen, wobei die Dienstanforderung eine Anforderung zum Verarbeiten einer Zahlungstransaktion umfasst, und wobei ein Verarbeiten der Dienstanforderung ein Verarbeiten (295) der Zahlungstransaktion unter Verwendung der Zahlungskontoinformationen umfasst, wobei optional das Verarbeiten (295) der Zahlungstransaktion unter Verwendung der Zahlungskontoinformationen Folgendes umfasst:
Identifizieren eines Ausgabesystems (150), das mit den Zahlungskontoinformationen assoziiert ist;
Erzeugen (1310) eines Zahlungs-Tokens, das mit den Zahlungskontoinformationen assoziiert werden soll;
Übertragen (1330) des Zahlungs-Tokens und der assoziierten Zahlungskontoinformationen und Transaktionsdetails an das Ausgabesystem (150);
Übertragen (1340) des Zahlungs-Tokens an die Dienst-Rechenvorrichtung (130), wobei die Dienst-Rechenvorrichtung (130) eine Transaktionsautorisierungsanforderung erzeugt (1510), die an das Ausgabesystem (150) übermittelt werden soll, umfassend das Zahlungs-Token und Transaktionsdetails, wobei das Ausgabesystem (150) die Transaktionsautorisierungsanforderung genehmigt (1530).

8. Computerprogrammprodukt nach einem der vorherigen Ansprüche 5 bis 7, wobei die Dienst-Rechenvorrichtung (130) ein Bild eines Benutzers (101) erfasst (1020, 1030), eine zweite Gesichtsschablone erzeugt (1040) und die erzeugte zweite Gesichtsschablone mit der einen oder den mehreren Gesichtsschablonen in dem Protokoll der aktuellen Kunden an dem Standort vergleicht (1070, 1080), um eine übereinstimmende Gesichtsschablone aus dem Protokoll der aktuellen Kunden an dem Standort zu identifizieren, der die Benutzer-Gesichtsschablone umfasst.

9. System (160, 2000) zum Verarbeiten von Freisprech-Dienstanforderungen mit Gesichtserkennung von Benutzern (101), umfassend: eine Speichervorrichtung (2030, 2040);
einen Prozessor (2010), der kommunikativ mit der Speichervorrichtung (2030, 2040) gekoppelt ist, wobei der Prozessor (2010) Anwendungscodeanweisungen ausführt, die in der Speichervorrichtung (2030, 2040) gespeichert sind, um das System (160, 2000) zu Folgendem zu veranlassen
Empfangen (230), von einer Benutzer-Rechenvorrichtung (110), die mit einem Benutzerkonto assoziiert ist, von ersten Standortdaten und einer Benutzer-Kontokennung;
Bestimmen, dass die empfangenen ersten Standortdaten einem Standort entsprechen, der eine Dienst-Rechenvorrichtung (130) umfasst;
Hinzufügen (850) einer Benutzer-Gesichtsschablone, die mit dem Benutzerkonto assoziiert ist, das durch die Benutzer-Kontokennung identifiziert ist, zu einem Protokoll von aktuellen Kunden an dem Standort;
Empfangen, von der Dienst-Rechenvorrichtung (130) an dem Standort, einer Anforderung nach dem Protokoll von aktuellen Kunden an dem Standort;
Übertragen, an die Dienst-Rechenvorrichtung (130) an dem Standort, des Protokolls von aktuellen Kunden, umfassend eine oder mehrere Gesichtsschablonen und umfassend mindestens die Benutzer-Gesichtsschablone;
Empfangen, von der Dienst-Rechenvorrichtung (130), einer Anforderung zum Verarbeiten einer Dienstanforderung und einer Angabe einer Identifikation einer Benutzer-Gesichtsschablone;
Extrahieren von Benutzer-Kontodaten, die mit dem Benutzerkonto assoziiert sind, das mit der Benutzer-Gesichtsschablone assoziiert ist; und
Verarbeiten einer Dienstanforderung basierend auf Kontodaten, die mit dem Benutzerkonto assoziiert sind, **dadurch gekennzeichnet, dass**
der Prozessor (2010) ferner konfiguriert ist, um Anwendungscodebefehle auszuführen, die in der Speichervorrichtung (2030, 2040) gespeichert sind, um das System (160, 2000) zu Folgendem zu veranlassen:
an einem Zeitpunkt nach Hinzufügen (850) der Gesichtsschablone, die mit dem Benutzerkonto assoziiert ist, zu dem Protokoll von aktuellen Kunden an dem Standort, Empfangen, von der Benutzer-Rechenvorrichtung (110), von zweiten Standortdaten;
Bestimmen, dass die zweiten Standortdaten einen Standort angeben, der größer ist als ein Schwellenwertabstand von dem Standort der Dienst-Rechenvorrichtung (130); und
Entfernern der Gesichtsschablone, die mit dem Benutzerkonto assoziiert ist, aus dem Protokoll von aktuellen Kunden an dem Standort;
und/oder der Prozessor (2010) ferner konfiguriert ist, um Anwendungscodebefehle auszuführen, die in der Speichervorrichtung (2030, 2040) gespeichert sind, um das System (160, 2000) zu Folgendem zu veranlassen:
an einem Zeitpunkt nach Hinzufügen (850) der Gesichtsschablone, die mit dem Benutzerkonto des Protokolls von aktuellen Kunden an dem Standort assoziiert ist, Bestimmen, dass nachfolgende Standortdaten nicht von der Benutzer-Rechenvorrichtung (110) empfangen wurden; und
als Reaktion auf ein Bestimmen, dass nachfolgende Standortdaten nicht von der Benutzer-Rechenvorrichtung (110) empfangen wurden, Entfernen der Gesichtsschablone aus dem Protokoll von aktuellen Kunden an dem Standort.

10. System (160, 2000) nach Anspruch 9, wobei der Prozessor (2010) ferner konfiguriert ist, um Anwendungscodebefehle auszuführen, die in der Speichervorrichtung (2030, 2040) gespeichert sind, um das System (160, 2000) zu Folgendem zu veranlassen:
Empfangen (240, 540) eines ersten Gesichtsbilds eines Benutzers (101);
Erzeugen (550) der Benutzer-Gesichtsschablone, umfassend eine Computercode-Darstellung des ersten Gesichtsbilds; und
Assoziieren (550) der erzeugten Benutzer-Gesichtsschablone mit dem Konto des Benutzers (101).

11. System nach Anspruch 9 oder 10, wobei die Benutzer-Kontodaten Zahlungskontoinformationen umfassen, wobei die Dienstanforderung eine Anforderung zum Verarbeiten einer Zahlungstransaktion umfasst, und wobei ein Verarbeiten der Dienstanforderung ein Verarbeiten (295) der Zahlungstransaktion unter Verwendung der Zahlungskontoinformationen umfasst, wobei optional das Verarbeiten (295) der Zahlungstransaktion unter Verwendung der Zahlungskontoinformationen Folgendes umfasst:
Identifizieren eines Ausgabesystems (150), das mit den Zahlungskontoinformationen assoziiert ist;
Erzeugen (1310) eines Zahlungs-Tokens, das mit den Zahlungskontoinformationen assoziiert werden soll;
Übertragen (1330) des Zahlungs-Tokens und der assoziierten Zahlungskontoinformationen und Transaktionsdetails an das Ausgabesystem (150);
Übertragen (1340) des Zahlungs-Tokens an die Dienst-Rechenvorrichtung (130), wobei die Dienst-Rechenvorrichtung (130) eine Transaktionsautorisierungsanforderung erzeugt (1510), die an das Ausgabesystem (150) übermittelt werden soll, umfassend das Zahlungs-Token und Transaktionsdetails, wobei das Ausgabesystem (150) die Transaktionsautorisierungsanforderung genehmigt.

12. System (160, 2000) nach einem der vorherigen Ansprüche 9 bis 11, wobei die Dienst-Rechenvorrichtung (130) ein Bild eines Benutzers (101) erfasst (1020, 1030), eine zweite Gesichtsschablone erzeugt (1040) und die erzeugte zweite Gesichtsschablone mit der einen oder den mehreren Gesichtsschablonen in dem Protokoll von aktuellen Kunden an dem Standort vergleicht (1070, 1080), um eine übereinstimmende Gesichtsschablone aus dem Protokoll von aktuellen Kunden an dem Standort zu identifizieren, der die Benutzer-Gesichtsschablone umfasst.

## Revendications

1. Procédé (200) mis en œuvre par ordinateur pour traiter des demandes de service mains libres avec reconnaissance faciale d'utilisateurs (101), comprenant :
la réception (230), par un ou plusieurs dispositifs informatiques (160) et en provenance d'un dispositif informatique d'utilisateur (110) associé à un compte d'utilisateur, de premières données d'emplacement et d'un identifiant de compte utilisateur ;
la détermination, par le ou les dispositifs informatiques (160), que les premières données d'emplacement reçues correspondent à un emplacement comprenant un dispositif informatique de service (130) ;
l'ajout (850), par le ou les dispositifs informatiques (160), d'un modèle facial d'utilisateur associé au compte d'utilisateur identifié par l'identifiant de compte d'utilisateur à un journal de clients actuels au niveau de l'emplacement ;
la réception, par le ou les dispositifs informatiques (160) et en provenance du dispositif informatique de service (130) au niveau de l'emplacement, d'une demande de journal de clients actuels au niveau de l'emplacement ;
l'émission, par le ou les dispositifs informatiques (160) et vers le dispositif informatique de service (130) au niveau de l'emplacement, du journal de clients actuels comprenant un ou plusieurs modèles faciaux et comprenant au moins le modèle facial d'utilisateur ;
la réception, par le ou les dispositifs informatiques (160) et en provenance du dispositif informatique de service (130), d'une demande pour traiter une demande de service et une indication d'une identification de modèle facial d'utilisateur ;
l'extraction, par le ou les dispositifs informatiques (160), des données de compte utilisateur associées au compte utilisateur associé au modèle facial d'utilisateur ; et
le traitement, par le ou les dispositifs informatiques (160), d'une demande de service sur la base des données de compte associées au compte d'utilisateur ;
**caractérisé en ce que** le procédé comprend en outre :
à un moment après avoir ajouté (850) le modèle facial associé au compte d'utilisateur au journal de clients actuels au niveau de l'emplacement, la réception, par le ou les dispositifs informatiques (160) en provenance du dispositif informatique d'utilisateur (110), des secondes données d'emplacement ;
la détermination, par le ou les dispositifs informatiques (160), que les secondes données d'emplacement indiquent un emplacement supérieur à une distance seuil de l'emplacement du dispositif informatique de service (130) ; et
la suppression, par le ou les dispositifs informatiques (160), du modèle facial associé au compte d'utilisateur du journal de clients actuels au niveau de l'emplacement et/ou comprend en
à un moment après avoir ajouté (850) le modèle facial associé au compte d'utilisateur du journal de clients actuels au niveau de l'emplacement, la détermination, par le ou les dispositifs informatiques (160), que les données d'emplacement ultérieures n'ont pas été reçues en provenance du dispositif informatique d'utilisateur (110) ; et
en réponse à la détermination que les données d'emplacement ultérieures n'ont pas été reçues en provenance du dispositif informatique d'utilisateur (110), le retrait, par le ou les dispositifs informatiques (160), du modèle facial du journal de clients actuels au niveau de l'emplacement.

2. Procédé mis en œuvre par ordinateur selon la revendication 1, comprenant en outre :
la réception (240, 540), par un ou plusieurs dispositifs informatiques (160), d'une première image faciale d'un utilisateur (101) ;
la génération (550), par le ou les dispositifs informatiques (160), du modèle facial d'utilisateur comprenant une représentation de code informatique de la première image faciale ; et
l'association (550), par le ou les dispositifs informatiques (160), du modèle facial d'utilisateur généré au compte de l'utilisateur (101).

3. Procédé mis en œuvre par ordinateur selon la revendication 1 ou 2, lesdites données de compte d'utilisateur comprenant des informations de compte de paiement, ladite demande de service comprenant une demande pour traiter une transaction de paiement, et ledit traitement de la demande de service comprenant le traitement (295) de la transaction de paiement à l'aide des informations de compte de paiement, éventuellement, ledit traitement (295) de la transaction de paiement à l'aide des informations de compte de paiement comprenant :
l'identification, par le ou les dispositifs informatiques (160), d'un système émetteur (150) associé aux informations de compte de paiement ;
la génération (1310), par le ou les dispositifs informatiques (160), d'un jeton de paiement à associer aux informations de compte de paiement ;
l'émission (1340), par le ou les dispositifs informatiques (160), du jeton de paiement et des informations de compte de paiement associées et les détails de transaction vers le système émetteur (150) ;
l'émission (1340), par le ou les dispositifs informatiques (160) et vers le dispositif informatique de service (130), du jeton de paiement, ledit dispositif informatique de service (130) générant (1510) une demande d'autorisation de transaction pour communiquer au système émetteur (150) comprenant lejeton de paiement et les détails de transaction, ledit système émetteur (150) approuvant (1530) la demande d'autorisation de transaction.

4. Procédé mis en œuvre par ordinateur selon l'une quelconque des revendications précédentes, ledit dispositif informatique de service (130) capturant (1020, 1030) une image d'un utilisateur, générant (1040) un second modèle facial et comparant (1070, 1080) le second modèle facial généré au ou aux modèles faciaux dans le journal de clients actuels au niveau de l'emplacement pour identifier un modèle facial correspondant à partir du journal de clients actuels au niveau de l'emplacement comprenant le modèle facial d'utilisateur.

5. Produit programme informatique, comprenant :
un support non transitoire lisible par ordinateur (2030, 2040) comportant des instructions de programme exécutables par ordinateur (2050) incorporées sur celui-ci destinées à être exécutées par un ou plusieurs dispositifs informatiques (160) pour traiter des demandes de service mains libres avec reconnaissance faciale d'utilisateurs (101), les instructions de programme exécutables par ordinateur comprenant :
des instructions de programme exécutables par ordinateur pour recevoir (230), en provenance d'un dispositif informatique d'utilisateur (110) associé à un compte d'utilisateur, des premières données d'emplacement et un identifiant de compte d'utilisateur ;
des instructions de programme exécutables par ordinateur pour déterminer que les premières données d'emplacement reçues correspondent à un emplacement comprenant un dispositif informatique de service (130) ;
des instructions de programme exécutables par ordinateur pour ajouter (850) un modèle facial d'utilisateur associé au compte d'utilisateur identifié par l'identifiant de compte d'utilisateur à un journal de clients actuels au niveau de l'emplacement ;
des instructions de programme exécutables par ordinateur pour recevoir, en provenance du dispositif informatique de service (130) au niveau de l'emplacement, une demande de journal de clients actuels au niveau de l'emplacement ;
des instructions de programme exécutables par ordinateur pour émettre, vers le dispositif informatique de service (130) au niveau de l'emplacement, le journal de clients actuels comprenant un ou plusieurs modèles facial et comprenant au moins le modèle facial d'utilisateur ;
des instructions de programme exécutables par ordinateur pour recevoir, en provenance du dispositif informatique de service (130), une demande pour traiter une demande de service et une indication d'une identification de modèle facial d'utilisateur ;
des instructions de programme exécutables par ordinateur pour extraire des données de compte d'utilisateur associées au compte d'utilisateur associé au modèle facial d'utilisateur ; et
des instructions de programme exécutables par ordinateur pour traiter une demande de service sur la base de données de compte associées au compte d'utilisateur, **caractérisé en ce que** les instructions de programme exécutables par ordinateur comprennent en outre :
à un moment après avoir ajouté (850) le modèle facial associé au compte d'utilisateur au journal de clients actuels au niveau de l'emplacement, des instructions de programme exécutables par ordinateur pour recevoir, en provenance du dispositif informatique d'utilisateur (110), des secondes données d'emplacement ;
des instructions de programme exécutables par ordinateur pour déterminer que les secondes données d'emplacement indiquent un emplacement supérieur à une distance seuil de l'emplacement du dispositif informatique de service (130) ; et
des instructions de programme exécutables par ordinateur pour supprimer le modèle facial associé au compte d'utilisateur du journal de clients actuels au niveau de l'emplacement et/ou comprenant en outre :
à un moment après avoir ajouté (850) le modèle facial associé au compte d'utilisateur du journal de clients actuels au niveau de l'emplacement, des instructions de programme exécutables par ordinateur pour déterminer que les données d'emplacement ultérieures n'ont pas été reçues en provenance du dispositif informatique d'utilisateur (110) ; et
en réponse à la détermination que les données d'emplacement ultérieures n'ont pas été reçues en provenance du dispositif informatique d'utilisateur (110), des instructions de programme exécutables par ordinateur pour supprimer le modèle facial du journal de clients actuels au niveau de l'emplacement.

6. Produit programme informatique selon la revendication 5, comprenant en outre :
des instructions de programme exécutables par ordinateur pour recevoir (240, 540) une première image faciale d'un utilisateur (101) ;
des instructions de programme exécutables par ordinateur pour générer (550) le modèle facial d'utilisateur comprenant une représentation de code informatique de la première image faciale ; et
des instructions de programme exécutables par ordinateur pour associer (550) le modèle facial d'utilisateur généré au compte de l'utilisateur (101).

7. Produit programme informatique selon la revendication 5 ou 6, lesdites données de compte d'utilisateur comprenant des informations de compte de paiement, ladite demande de service comprenant une demande pour traiter une transaction de paiement, et ledit traitement de la demande de service comprenant le traitement (295) de la transaction de paiement à l'aide des informations de compte de paiement, éventuellement, ledit traitement (295) de la transaction de paiement à l'aide des informations de compte de paiement comprenant :
l'identification d'un système émetteur (150) associé aux informations de compte de paiement ;
la génération (1310) d'un jeton de paiement à associer aux informations de compte de paiement ;
l'émission (1330) du jeton de paiement et des informations de compte de paiement associées et les détails de transaction au système émetteur (150) ;
l'émission (1340), vers le dispositif informatique de service (130), du jeton de paiement, ledit dispositif informatique de service (130) générant (1510) une demande d'autorisation de transaction à communiquer au système émetteur (150) comprenant le jeton de paiement et les détails de transaction, ledit système émetteur (150) approuvant (1530) la demande d'autorisation de transaction.

8. Produit programme informatique selon l'une quelconque des revendications 5 à 7 précédentes, ledit dispositif informatique de service (130) capturant (1020, 1030) une image d'un utilisateur (101), générant (1040) un second modèle facial et comparant (1070, 1080) le second modèle facial généré au ou aux modèles faciaux dans le journal de clients actuels au niveau de l'emplacement pour identifier un modèle facial correspondant à partir du journal de clients actuels au niveau de l'emplacement comprenant le modèle facial d'utilisateur.

9. Système (160, 2000) pour traiter des demandes de service mains libres avec reconnaissance faciale d'utilisateurs (101), comprenant :
un dispositif de stockage (2030, 2040) ;
un processeur (2010) couplé en communication au dispositif de stockage (2030, 2040), ledit processeur (2010) exécutant des instructions de code d'application qui sont stockées dans le dispositif de stockage (2030, 2040) pour amener le système (160, 2000) à :
recevoir (230), en provenance d'un dispositif informatique d'utilisateur (110) associé à un compte d'utilisateur, des premières données d'emplacement et un identifiant de compte d'utilisateur ;
déterminer que les premières données d'emplacement reçues correspondent à un emplacement comprenant un dispositif informatique de service (130) ;
ajouter (850) un modèle facial d'utilisateur associé au compte d'utilisateur identifié par l'identifiant de compte d'utilisateur à un journal de clients actuels au niveau de l'emplacement ;
recevoir, en provenance du dispositif informatique de service (130) au niveau de l'emplacement, une demande pour le journal de clients actuels au niveau de l'emplacement ;
émettre, vers le dispositif informatique de service (130) au niveau de l'emplacement, le journal de clients actuels comprenant un ou plusieurs modèles faciaux et comprenant au moins le modèle facial de l'utilisateur ;
recevoir, en provenance du dispositif informatique de service (130), une demande pour traiter une demande de service et une indication d'une identification d'un modèle facial d'utilisateur ;
extraire des données de compte d'utilisateur associées au compte d'utilisateur associé au modèle facial d'utilisateur ; et
traiter une demande de service sur la base des données de compte associées au compte d'utilisateur ; **caractérisé en ce que**
le processeur (2010) est en outre configuré pour exécuter des instructions de code d'application qui sont stockées dans le dispositif de stockage (2030, 2040) pour amener le système (160, 2000) à :
à un moment après avoir ajouté (850) le modèle facial associé au compte d'utilisateur au journal de clients actuels au niveau de l'emplacement, recevoir, en provenance du dispositif informatique d'utilisateur (110), des secondes données d'emplacement ;
déterminer que les secondes données d'emplacement indiquent un emplacement supérieur à une distance seuil de l'emplacement du dispositif informatique de service (130) ; et
supprimer le modèle facial associé au compte d'utilisateur du journal de clients actuels au niveau de l'emplacement ;
et/ou le processeur (2010) étant en outre configuré pour exécuter des instructions de code d'application qui sont stockées dans le dispositif de stockage (2030, 2040) pour amener le système (160, 2000) à :
à un moment après l'ajout (850) du modèle facial associé au compte d'utilisateur du journal de clients actuels au niveau de l'emplacement, déterminer que les données d'emplacement ultérieures n'ont pas été reçues en provenance du dispositif informatique d'utilisateur (110) ; et
en réponse à la détermination que les données d'emplacement ultérieures n'ont pas été reçues en provenance du dispositif informatique d'utilisateur (110), la suppression du modèle facial du journal de clients actuels au niveau de l'emplacement.

10. Système (160, 2000) selon la revendication 9, ledit processeur (2010) étant en outre configuré pour exécuter des instructions de code d'application qui sont stockées dans le dispositif de stockage (2030, 2040) pour amener le système (160, 2000) à :
recevoir (240, 540) une première image faciale d'un utilisateur (101) ;
générer (550) le modèle facial d'utilisateur comprenant une représentation de code informatique de la première image faciale ; et
associer (550) le modèle facial d'utilisateur généré au compte de l'utilisateur (101).

11. Système selon la revendication 9 ou 10, lesdites données de compte d'utilisateur comprenant des informations de compte de paiement, ladite demande de service comprenant une demande pour traiter une transaction de paiement, et ledit traitement de la demande de service comprenant le traitement (295) de la transaction de paiement à l'aide des informations de compte de paiement, éventuellement, le traitement (295) de la transaction de paiement à l'aide des informations de compte de paiement comprenant :
l'identification d'un système émetteur (150) associé aux informations de compte de paiement ;
la génération (1310) d'un jeton de paiement à associer aux informations de compte de paiement ;
l'émission (1330) du jeton de paiement et des informations de compte de paiement associées et les détails de transaction au système émetteur (150) ;
l'émission (1340), vers le dispositif informatique de service (130), du jeton de paiement, ledit dispositif informatique de service (130) générant (1510) une demande d'autorisation de transaction à communiquer au système émetteur (150) comprenant le jeton de paiement et les détails de transaction, ledit système émetteur (150) approuvant la demande d'autorisation de transaction.

12. Système (160, 2000) selon l'une quelconque des revendications 9 à 11 précédentes, ledit dispositif informatique de service (130) capturant (1020, 1030) une image d'un utilisateur (101), générant (1040) un second modèle facial, et comparant (1070, 1080) le second modèle facial généré au ou aux modèles faciaux dans le journal de clients actuels au niveau de l'emplacement pour identifier un modèle facial correspondant à partir du journal de clients actuels au niveau de l'emplacement comprenant le modèle facial d'utilisateur.
